(19) Europäisches Patentamt
European Patent Office
Office européen des brevets

(11) **EP 4 664 784 A1**

(12) **EUROPEAN PATENT APPLICATION**
published in accordance with Art. 153(4) EPC

(43) Date of publication:
**17.12.2025 Bulletin 2025/51**

(21) Application number: **24755949.5**

(22) Date of filing: **29.01.2024**

(51) International Patent Classification (IPC):
*H04B 7/06* $^{(2006.01)}$

(52) Cooperative Patent Classification (CPC):
**H04B 7/06; H04B 7/08; H04W 72/044; H04W 72/25**

(86) International application number:
**PCT/CN2024/074413**

(87) International publication number:
**WO 2024/169575 (22.08.2024 Gazette 2024/34)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **17.02.2023 CN 202310162616
07.04.2023 CN 202310384302**

(71) Applicant: **Huawei Technologies Co., Ltd.
Shenzhen, Guangdong 518129 (CN)**

(72) Inventors:
- **ZHANG, Yi
  Shenzhen, Guangdong 518129 (CN)**
- **XU, Jiaojiao
  Shenzhen, Guangdong 518129 (CN)**
- **QI, Hong
  Shenzhen, Guangdong 518129 (CN)**
- **SU, Hongjia
  Shenzhen, Guangdong 518129 (CN)**

(74) Representative: **Gill Jennings & Every LLP
The Broadgate Tower
20 Primrose Street
London EC2A 2ES (GB)**

(54) **COMMUNICATION METHOD, APPARATUS AND SYSTEM**

(57) This application provides a communication method, apparatus, and system, which can be applied to a sidelink communication system. In the method, indication information of a transmit end is carried in a sidelink synchronization signal block, so that a receive end of the sidelink synchronization signal block can identify a source of a sidelink synchronization signal (or identify the transmit end of the sidelink synchronization signal block) based on the indication information. This facilitates subsequent beam management and other processes, and helps improve communication quality.

FIG. 3

## Description

This application claims priorities to Chinese Patent Application No. 202310162616.8, filed with the China National Intellectual Property Administration on February 17, 2023 and entitled "COMMUNICATION METHOD, APPARATUS, AND SYSTEM", and to Chinese Patent Application No. 202310384302.2, filed with the China National Intellectual Property Administration on April 7, 2023 and entitled "COMMUNICATION METHOD, APPARATUS, AND SYSTEM", both of which are incorporated herein by reference in their entireties.

## TECHNICAL FIELD

This application relates to the communication field, and in particular, to a communication method, apparatus, and system.

## BACKGROUND

As an important technology proposed for FR2 in 5G NR, beam management is a process in which a 5G base station (Next Generation NodeB, gNB) and a user equipment (User Equipment, UE) obtain and maintain a set of beams used for sending and receiving. However, on a sidelink (sidelink, SL) in a new radio (new radio, NR) system, different UEs and different beam directions cannot be distinguished through sidelink synchronization signal blocks (sidelink synchronization signal and PBCH block, S-SSB). Consequently, beam management cannot be implemented, and communication quality on the SL urgently needs to be improved.

## SUMMARY

This application provides a communication method, apparatus, and system, to improve communication quality.

According to a first aspect, an embodiment of this application provides a communication method. The method may be performed by a terminal device, or may be performed by a chip or a circuit used in the terminal device. This is not limited in this application. For ease of description, an example in which the method is performed by a first terminal device is used below for description.

The method may include: The first terminal device receives a first sidelink synchronization signal block. The first sidelink synchronization signal block includes first indication information. The first indication information indicates a second terminal device. The first terminal device determines, based on the first indication information, that the first sidelink synchronization signal block is from the second terminal device.

The method is applicable to an FR2 beam.

In the method, the sidelink synchronization signal block includes indication information indicating a terminal device (referred to as the second terminal device) that sends the sidelink synchronization signal block, so that a receive end (referred to as the first terminal device) of the sidelink synchronization signal block distinguishes a transmit end of the synchronization signal block, to facilitate beam management between the first terminal device and the second terminal device and help improve communication quality.

In some implementations, the first sidelink synchronization signal block belongs to N sidelink synchronization signal blocks. The N sidelink synchronization signal blocks include N pieces of first indication information. The first indication information belongs to the N pieces of first indication information. The N pieces of first indication information indicate N terminal devices corresponding to the N sidelink synchronization signal blocks. The method further includes:

The first terminal device receives the N sidelink synchronization signal blocks.

The N terminal devices corresponding to the N sidelink synchronization signal blocks are terminal devices that send the sidelink synchronization signal blocks. A same terminal device may send sidelink synchronization signal blocks in a plurality of beam directions. The sidelink synchronization signal blocks have same content.

In this manner, a plurality of terminal devices send sidelink synchronization signal blocks to the first terminal device. Each sidelink synchronization signal block carries indication information of the terminal device, so that the first terminal device can distinguish between sources of sidelink synchronization signals in the plurality of terminal devices.

In some implementations, the first sidelink synchronization signal block includes second indication information. The second indication information indicates a direction of the first sidelink synchronization signal block.

Optionally, the second indication information may be a beam index.

In this manner, indication information of the beam direction is further added to the sidelink synchronization signal block, to distinguish between different beams. This can further implement beam management, to improve communication quality.

In some implementations, the first sidelink synchronization signal block belongs to M sidelink synchronization signal blocks. The M sidelink synchronization signal blocks further include M pieces of second indication information. The second indication information belongs to the M pieces of second indication information. The M pieces of second indication information indicate directions of the M sidelink synchronization signal blocks.

In other words, different beam directions each correspond to one piece of second indication information. The second indication information carried in the sidelink synchronization signal block indicates the beam direction of the sidelink synchronization signal block.

The M sidelink synchronization signal blocks may be sent by a same terminal device. For example, each of the N terminal devices has M beam directions. The M sidelink synchronization signal blocks are sent in the M beam directions.

In some implementations, the second indication information is a sidelink synchronization signal block index. The sidelink synchronization signal block index is carried in a physical sidelink broadcast channel demodulation reference signal PSBCH DMRS.

The sidelink synchronization signal block index is referred to as an S-SSB index for short.

In some implementations, the first indication information is carried in a sidelink primary synchronization signal S-PSS and a sidelink secondary synchronization signal S-SSS.

In some implementations, the first indication information is carried in an S-PSS, an S-SSS, and a PSBCH DMRS.

It should be understood that in this manner, the second indication information is no longer carried.

In this manner, an indication requirement can still be satisfied when there are an excessively large quantity of terminal devices.

In some implementations, the first indication information is a first identifier. The first identifier indicates the second terminal device. The first identifier is determined from at least one candidate identifier. Any candidate identifier in the at least one candidate identifier is a part of a sidelink synchronization signal identifier SL-SSID. The SL-SSID is carried in the sidelink synchronization signal block.

Optionally, the first identifier may be randomly determined from the at least one candidate identifier.

In some implementations, the SL-SSID is indicated through Y bits, and the at least one candidate identifier is indicated through X bits in the Y bits. X is less than Y. A value range of the at least one candidate identifier is {0, 1, ..., 167}.

In other words, in this manner, identifiers of terminal devices are indicated through some fields or indexes in SL-SSIDs, to reduce indication overheads.

In some implementations, the SL-SSID satisfies the following relations:

$$N_{ID}^{SL} = N_{ID,1}^{SL} + 336 N_{ID,2}^{SL}$$

$$N_{ID,1}^{SL} = N_{ID,11}^{SL} + 168 N_{ID,12}^{SL}$$

$N_{ID}^{SL}$ is an index value set of the SL-SSID. $N_{ID,1}^{SL}$ is an index value set of the S-SSS. $N_{ID,1}^{SL} \in \{0, 1, \ldots, 335\}$. $N_{ID,2}^{SL}$ is an index value set of the S-PSS. $N_{ID,2}^{SL} \in \{0, 1, 2\}$. $N_{ID,11}^{SL}$ is a candidate identifier. $N_{ID,12}^{SL} \in \{0, 1\}$. $N_{ID,11}^{SL} \in \{0, 1, \ldots, 167\}$.

In other words, {0, 1, ... ,167} in the SL-SSIDs indicate terminal devices, and the other SL-SSIDs indicate synchronization information, to further reduce overheads.

In some implementations, the SL-SSID satisfies the following relation:

$$N_{ID}^{SL} = N_{ID,1}^{SL} + 336 N_{ID,2}^{SL}$$

$N_{ID}^{SL}$ is an index value set of the SL-SSID. $N_{ID,1}^{SL}$ is an index value set of the S-SSS. $N_{ID,1}^{SL} \in \{0, 1, \ldots, 335\}$. $N_{ID,2}^{SL}$ is an index value set of the S-PSS. $N_{ID,2}^{SL} \in \{0, 1, 2\}$ or $N_{ID,2}^{SL} \in \{0, 1\}$.

In other words, {0, 1,..., 1007} or {0, 1,..., 671} in the SL-SSIDs all indicate terminal devices, and synchronization information is carried in the PSBCH DMRS, to further reduce overheads and increase a quantity of indicated terminal devices.

In some implementations, a value of the SL-SSID is associated with at least one of a location of the second terminal, a synchronization source, or a preconfigured slot.

Optionally, the value of the SL-SSID is determined based on at least one of the location of the second terminal, the synchronization source, or the preconfigured slot.

In some implementations, the first terminal device corresponds to a second identifier. The first terminal device determines a third identifier when the first identifier is the same as the second identifier. The third identifier is different from the first identifier. The third identifier belongs to the at least one candidate identifier. The third identifier indicates the first terminal device.

In other words, when identifiers of the terminal devices conflict, the receive end of the sidelink synchronization signal block may reselect an identifier different from an identifier of the transmit end of the sidelink synchronization signal block.

In some implementations, the first terminal device sends third indication information when determining that a preset condition is satisfied. The third indication information indicates an identifier conflict. The preset condition is at least one of the following:

a quantity of sidelink synchronization signal blocks that include a same identifier and whose reference signal received powers RSRPs are greater than a first threshold is greater than a second threshold;
a proportion of the quantity of sidelink synchronization signal blocks that include the same identifier and whose RSRPs are greater than the first threshold in a quantity of sidelink synchronization signal blocks received by the first terminal device is greater than a third threshold;
the first terminal device receives, on different beam resources, sidelink synchronization signal blocks that include a same identifier and a same sidelink synchronization signal block index; or
the first terminal device receives, on a same beam resource, sidelink synchronization signal blocks that include a same identifier and different sidelink synchronization signal block indexes.

The RSRP may be obtained by the first terminal device by measuring the sidelink synchronization signal block.

In other words, when discovering an identifier conflict, the receive end of the sidelink synchronization signal block may feed back the conflict to the transmit end of the sidelink synchronization signal block.

According to a second aspect, an embodiment of this application provides a measurement method. The method may be performed by a terminal device, or may be performed by a chip or a circuit used in the terminal device. This is not limited in this application. For ease of description, an example in which the method is performed by a second terminal device is used below for description.

The method may include: The second terminal device determines first indication information. The first indication information indicates the second terminal device. The second terminal device sends a first sidelink synchronization signal block to a first terminal device. The first sidelink synchronization signal block includes the first indication information.

In some implementations, the first sidelink synchronization signal block belongs to N sidelink synchronization signal blocks. The N sidelink synchronization signal blocks include N pieces of first indication information. The first indication information belongs to the N pieces of first indication information. The N pieces of first indication information indicate N terminal devices corresponding to the N sidelink synchronization signal blocks.

In some implementations, the first sidelink synchronization signal block includes second indication information. The second indication information indicates a direction of the first sidelink synchronization signal block.

In some implementations, the first sidelink synchronization signal block belongs to M sidelink synchronization signal blocks. The M sidelink synchronization signal blocks further include M pieces of second indication information. The second indication information belongs to the M pieces of second indication information. The M pieces of second indication information indicate directions of the M sidelink synchronization signal blocks.

In some implementations, the second indication information is a sidelink synchronization signal block index. The sidelink synchronization signal block index is carried in a physical sidelink broadcast channel demodulation reference signal PSBCH DMRS.

In some implementations, the first indication information is carried in a sidelink primary synchronization signal S-PSS and a sidelink secondary synchronization signal S-SSS.

In some implementations, the first indication information is carried in an S-PSS, an S-SSS, and a PSBCH DMRS.

In some implementations, the first indication information is a first identifier. The first identifier indicates the second terminal device. The method further includes:

The second terminal device determines the first identifier from at least one candidate identifier. Any candidate identifier in the at least one candidate identifier is a part of a sidelink synchronization signal identifier SL-SSID. The SL-SSID is carried in the sidelink synchronization signal block.

Optionally, the second terminal device randomly determines the first identifier from the at least one candidate identifier.

In some implementations, the SL-SSID is indicated through Y bits, and the at least one candidate identifier is indicated through X bits in the Y bits. X is less than Y. A value range of the at least one candidate identifier is {0, 1, ..., 167}.

In some implementations, the SL-SSID satisfies the following relations:

$$N_{ID}^{SL} = N_{ID,1}^{SL} + 336N_{ID,2}^{SL}$$

$$N_{ID,1}^{SL} = N_{ID,11}^{SL} + 168 N_{ID,12}^{SL}$$

$N_{ID}^{SL}$ is an index value set of the SL-SSID. $N_{ID,1}^{SL}$ is an index value set of the S-SSS. $N_{ID,1}^{SL} \in \{0, 1, \ldots, 335\}$. $N_{ID,2}^{SL}$ is an index value set of the S-PSS. $N_{ID,2}^{SL} \in \{0, 1, 2\}$. $N_{ID,11}^{SL}$ is a candidate identifier. $N_{ID,12}^{SL} \in \{0, 1\}$. $N_{ID,11}^{SL} \in \{0, 1, \ldots, 167\}$.

In some implementations, the SL-SSID satisfies the following relation:

$$N_{ID}^{SL} = N_{ID,1}^{SL} + 336 N_{ID,2}^{SL}$$

$N_{ID}^{SL}$ is an index value set of the SL-SSID. $N_{ID,1}^{SL}$ is an index value set of the S-SSS. $N_{ID,1}^{SL} \in \{0, 1, \ldots, 335\}$. $N_{ID,2}^{SL}$ is an index value set of the S-PSS. $N_{ID,2}^{SL} \in \{0, 1, 2\}$ or $N_{ID,2}^{SL} \in \{0, 1\}$.

In other words, {0, 1, ..., 1007} or {0, 1, ..., 671} in the SL-SSIDs all indicate terminal devices, and synchronization information is carried in the PSBCH DMRS, to further reduce overheads and increase a quantity of indicated terminal devices.

In some implementations, the second terminal apparatus receives third indication information. The third indication information indicates that the first identifier conflicts with a second identifier. The second identifier is an identifier of the first terminal apparatus.

The second terminal apparatus determines a fourth identifier. The fourth identifier is different from the first identifier. The fourth identifier belongs to the at least one candidate identifier.

In other words, after receiving identifier conflict feedback sent by the first terminal device, the second terminal device may redetermine an identifier different from the previously determined identifier.

In some implementations, the second terminal device determines, based on whether the S-SSB is used for beam management/beam matching or beam failure recovery/beam failure detection, whether to send the first S-SSB.

It should be understood that whether the S-SSB is used for beam management/beam matching or beam failure recovery/beam failure detection may be determined based on a preconfigured slot position of the S-SSB. For example, if the preconfigured slot position of the S-SSB is a position A, the S-SSB is used for beam management/beam matching or beam failure recovery/beam failure detection. The position may be predefined or configured. This is not limited. The preconfigured slot position may be used to distinguish a function of the S-SSB, that is, whether the S-SSB is used for beam management/beam matching or beam failure recovery/beam failure detection.

For example, if the S-SSB is used for beam management/beam matching or beam failure recovery/beam failure detection, the second terminal apparatus determines to send the first S-SSB.

In some implementations, the second terminal device determines, based on whether the second terminal device is in coverage of a cell, whether to send the first S-SSB.

Optionally, if the second terminal device is in coverage of a cell, *networkControlledSyncTx* is not configured, an RSRP measurement result of a reference cell is greater than a threshold *syncTxThreshIC*, and the S-SSB is used for beam management/beam matching, the second terminal device determines to send the first S-SSB.

The *networkControlledSyncTx* field indicates whether the second terminal device should send synchronization information (that is, become a synchronization source). *on* indicates that the second terminal device sends the synchronization information, and *off* indicates that the second terminal device does not send the synchronization information.

Optionally, if the second terminal device is out of coverage of a cell and is not directly synchronized to a GNSS, the second terminal device selects a synchronization reference terminal device, and a PSBCH-RSRP measurement result of the selected synchronization reference terminal device is greater than a threshold *syncTxThreshOoC,* the second terminal device determines to send the S-SSB.

In some implementations, the second terminal device determines a value of the SL-SSID based on at least one of a location of the second terminal device, a synchronization source, or a preconfigured slot.

Optionally, the second terminal device determines the value of the SL-SSID based on at least one of the location of the second terminal device, the synchronization source, or the preconfigured slot.

It should be understood that the second aspect is an implementation of the transmit end of the sidelink synchronization signal block corresponding to the first aspect. Explanations, supplements, and descriptions of beneficial effects of the first aspect are also applicable to the second aspect. Details are not described herein again.

According to a third aspect, a communication apparatus is provided. The communication apparatus includes a transceiver module and a processing module. The transceiver module is configured to receive a first sidelink synchronization signal block. The first sidelink synchronization signal block includes first indication information. The first indication information indicates a second terminal device. The processing module is configured to determine, based on the first indication information, that the first sidelink synchronization signal block is from the second terminal device.

In some implementations, the first sidelink synchronization signal block belongs to N sidelink synchronization signal blocks. The N sidelink synchronization signal blocks include N pieces of first indication information. The first indication information belongs to the N pieces of first indication information. The N pieces of first indication information indicate N terminal devices corresponding to the N sidelink synchronization signal blocks. The transceiver module is further configured to receive the N sidelink synchronization signal blocks.

In some implementations, the first sidelink synchronization signal block includes second indication information. The second indication information indicates a direction of the first sidelink synchronization signal block.

In some implementations, the first sidelink synchronization signal block belongs to M sidelink synchronization signal blocks. The M sidelink synchronization signal blocks further include M pieces of second indication information. The second indication information belongs to the M pieces of second indication information. The M pieces of second indication information indicate directions of the M sidelink synchronization signal blocks.

In some implementations, the second indication information is a sidelink synchronization signal block index. The sidelink synchronization signal block index is carried in a physical sidelink broadcast channel demodulation reference signal PSBCH DMRS.

In some implementations, the first indication information is carried in a sidelink primary synchronization signal S-PSS and a sidelink secondary synchronization signal S-SSS.

In some implementations, the first indication information is carried in an S-PSS, an S-SSS, and a PSBCH DMRS.

In some implementations, the first indication information is a first identifier. The first identifier indicates the second terminal device. The first identifier is determined from at least one candidate identifier. Any candidate identifier in the at least one candidate identifier is a part of a sidelink synchronization signal identifier SL-SSID. The SL-SSID is carried in the sidelink synchronization signal block.

In some implementations, the SL-SSID is indicated through Y bits, and the at least one candidate identifier is indicated through X bits in the Y bits. X is less than Y. A value range of the at least one candidate identifier is {0, 1, ..., 167}.

In some implementations, the SL-SSID satisfies the following relations:

$$N_{ID}^{SL} = N_{ID,1}^{SL} + 336 N_{ID,2}^{SL}$$

$$N_{ID,1}^{SL} = N_{ID,11}^{SL} + 168 N_{ID,12}^{SL}$$

$N_{ID}^{SL}$ is an index value set of the SL-SSID. $N_{ID,1}^{SL}$ is an index value set of the S-SSS. $N_{ID,1}^{SL} \in \{0, 1, \ldots, 335\}$ $N_{ID,2}^{SL}$ is an index value set of the S-PSS. $N_{ID,2}^{SL} \in \{0, 1, 2\}$. $N_{ID,11}^{SL}$ is a candidate identifier. $N_{ID,12}^{SL} \in \{0, 1\}$. $N_{ID,11}^{SL} \in \{0, 1, \ldots, 167\}$.

In some implementations, the SL-SSID satisfies the following relation:

$$N_{ID}^{SL} = N_{ID,1}^{SL} + 336 N_{ID,2}^{SL}$$

$N_{ID}^{SL}$ is an index value set of the SL-SSID. $N_{ID,1}^{SL}$ is an index value set of the S-SSS. $N_{ID,1}^{SL} \in \{0, 1, \ldots, 335\}$. $N_{ID,2}^{SL}$ is an index value set of the S-PSS. $N_{ID,2}^{SL} \in \{0, 1, 2\}$ or $N_{ID,2}^{SL} \in \{0, 1\}$.

In other words, {0, 1, ..., 1007} or {0, 1, ..., 671} in the SL-SSIDs all indicate terminal devices, and synchronization information is carried in the PSBCH DMRS, to further reduce overheads and increase a quantity of indicated terminal devices.

In some implementations, a value of the SL-SSID is associated with at least one of a location of the second terminal, a synchronization source, or a preconfigured slot.

Optionally, the value of the SL-SSID is determined based on at least one of the location of the second terminal device, the synchronization source, or the preconfigured slot.

In some implementations, the first terminal device corresponds to a second identifier. The first terminal device determines a third identifier when the first identifier is the same as the second identifier. The third identifier is different from the first identifier. The third identifier belongs to the at least one candidate identifier. The third identifier indicates the first terminal device.

In some implementations, the processing module is further configured to determine that a preset condition is satisfied. The transceiver module is configured to send third indication information. The third indication information indicates an identifier conflict. The preset condition is at least one of the following:

a quantity of sidelink synchronization signal blocks that include a same identifier and whose RSRPs are greater than a first threshold is greater than a second threshold;
a proportion of the quantity of sidelink synchronization signal blocks that include the same identifier and whose RSRPs are greater than the first threshold in a quantity of sidelink synchronization signal blocks received by the first terminal device is greater than a third threshold;
the first terminal device receives, on different beam resources, sidelink synchronization signal blocks that include a same identifier and a same sidelink synchronization signal block index; or
the first terminal device receives, on a same beam resource, sidelink synchronization signal blocks that include a same identifier and different sidelink synchronization signal block indexes.

According to a fourth aspect, a communication apparatus is provided. The communication apparatus includes a transceiver module and a processing module. The processing module is configured to determine first indication information. The first indication information indicates a second terminal device. The transceiver module is configured to send a first sidelink synchronization signal block to a first terminal device. The first sidelink synchronization signal block includes the first indication information.

In some implementations, the first sidelink synchronization signal block belongs to N sidelink synchronization signal blocks. The N sidelink synchronization signal blocks include N pieces of first indication information. The first indication information belongs to the N pieces of first indication information. The N pieces of first indication information indicate N terminal devices corresponding to the N sidelink synchronization signal blocks.

In some implementations, the first sidelink synchronization signal block includes second indication information. The second indication information indicates a direction of the first sidelink synchronization signal block.

In some implementations, the first sidelink synchronization signal block belongs to M sidelink synchronization signal blocks. The M sidelink synchronization signal blocks further include M pieces of second indication information. The second indication information belongs to the M pieces of second indication information. The M pieces of second indication information indicate directions of the M sidelink synchronization signal blocks.

In some implementations, the second indication information is a sidelink synchronization signal block index. The sidelink synchronization signal block index is carried in a PSBCH DMRS.

In some implementations, the first indication information is carried in a sidelink primary synchronization signal S-PSS and a sidelink secondary synchronization signal S-SSS.

In some implementations, the first indication information is carried in an S-PSS, an S-SSS, and a PSBCH DMRS.

In some implementations, the first indication information is a first identifier. The first identifier indicates the second terminal device. The processing module is further configured to determine the first identifier from at least one candidate identifier. Any candidate identifier in the at least one candidate identifier is a part of a sidelink synchronization signal identifier SL-SSID. The SL-SSID is carried in the sidelink synchronization signal block.

In some implementations, the SL-SSID is indicated through Y bits, and the at least one candidate identifier is indicated through X bits in the Y bits. X is less than Y. A value range of the at least one candidate identifier is {0, 1, ..., 167}.

In some implementations, the SL-SSID satisfies the following relations:

$$N_{ID}^{SL} = N_{ID,1}^{SL} + 336 N_{ID,2}^{SL}$$

$$N_{ID,1}^{SL} = N_{ID,11}^{SL} + 168 N_{ID,12}^{SL}$$

$N_{ID}^{SL}$ is an index value set of the SL-SSID. $N_{ID,1}^{SL}$ is an index value set of the S-SSS. $N_{ID,1}^{SL} \in \{0, 1, \ldots, 335\}$. $N_{ID,2}^{SL}$ is an index value set of the S-PSS. $N_{ID,2}^{SL} \in \{0, 1, 2\}$. $N_{ID,11}^{SL}$ is a candidate identifier. $N_{ID,12}^{SL} \in \{0, 1\}$. $N_{ID,11}^{SL} \in \{0, 1, \ldots, 167\}$.

In some implementations, the SL-SSID satisfies the following relation:

$$N_{ID}^{SL} = N_{ID,1}^{SL} + 336 N_{ID,2}^{SL}$$

$N_{ID}^{SL}$ is an index value set of the SL-SSID. $N_{ID,1}^{SL}$ is an index value set of the S-SSS. $N_{ID,1}^{SL} \in \{0, 1, \ldots, 335\}$.

$N_{ID,2}^{SL}$ is an index value set of the S-PSS. $N_{ID,2}^{SL} \in \{0, 1, 2\}$ or $N_{ID,2}^{SL} \in \{0, 1\}$.

In other words, {0, 1, ..., 1007} or {0, 1, ..., 671} in the SL-SSIDs all indicate terminal devices, and synchronization information is carried in the PSBCH DMRS, to further reduce overheads and increase a quantity of indicated terminal devices.

In some implementations, the transceiver module is further configured to receive third indication information. The third indication information indicates that the first identifier conflicts with a second identifier. The second identifier is an identifier of the first terminal apparatus. The processing module is further configured to determine a fourth identifier. The fourth identifier is different from the first identifier. The fourth identifier belongs to the at least one candidate identifier.

In some implementations, the processing module is further configured to determine, based on whether the S-SSB is used for beam management/beam matching or beam failure recovery/beam failure detection, whether to send the first S-SSB.

In some implementations, the processing module is further configured to determine, based on whether the second terminal device is in coverage of a cell, whether to send the first S-SSB.

Optionally, if the second terminal device is in coverage of a cell, *networkControlledSyncTx* is not configured, an RSRP measurement result of a reference cell is greater than a threshold *syncTxThreshIC*, and the S-SSB is used for beam management/beam matching, the processing module determines to send the first S-SSB.

Optionally, if the second terminal device is out of coverage of a cell and is not directly synchronized to a GNSS, the second terminal device selects a synchronization reference terminal device, and a PSBCH-RSRP measurement result of the selected synchronization reference terminal device is greater than a threshold *syncTxThreshOoC,* the processing module determines to send the S-SSB.

In some implementations, the processing module is further configured to determine a value of the SL-SSID based on at least one of a location of the second terminal device, a synchronization source, or a preconfigured slot.

It should be understood that the third aspect and the fourth aspect are respectively implementations of apparatus sides corresponding to the first aspect and the second aspect. Explanations, supplements, and descriptions of beneficial effects of the first aspect and the second aspect are also applicable to the third aspect and the fourth aspect. Details are not described again.

According to a fifth aspect, an embodiment of this application provides a communication apparatus, including an interface circuit and a processor. The interface circuit is configured to implement a function of the transceiver module in the third aspect. The processor is configured to implement a function of the processing module in the third aspect.

According to a sixth aspect, an embodiment of this application provides a communication apparatus, including an interface circuit and a processor. The interface circuit is configured to implement a function of the transceiver module in the fourth aspect. The processor is configured to implement a function of the processing module in the fourth aspect.

According to a seventh aspect, an embodiment of this application provides a computer-readable medium. The computer-readable medium stores program code to be executed by a terminal device. The program code includes instructions used to perform the method in the first aspect or the second aspect, any possible manner of the first aspect or the second aspect, or all possible manners of the first aspect or the second aspect.

According to an eighth aspect, an embodiment of this application provides a computer-readable medium. The computer-readable medium stores program code to be executed by a network device. The program code includes instructions used to perform the method in the first aspect or the second aspect, any possible manner of the first aspect or the second aspect, or all possible manners of the first aspect or the second aspect.

According to a ninth aspect, a computer program product storing computer-readable instructions is provided. When the computer-readable instructions are run on a computer, the computer is enabled to perform the method in the first aspect, any possible manner of the first aspect, or all possible manners of the first aspect.

According to a tenth aspect, a computer program product storing computer-readable instructions is provided. When the computer-readable instructions are run on a computer, the computer is enabled to perform the method in the second aspect, any possible manner of the second aspect, or all possible manners of the second aspect.

According to an eleventh aspect, a communication system is provided. The communication system includes an apparatus that has a function of implementing the method in the first aspect, any possible manner of the first aspect, or all possible manners of the first aspect and various possible designs and an apparatus that has a function of implementing the method in the second aspect, any possible manner of the second aspect, or all possible manners of the second aspect and various possible designs.

According to a twelfth aspect, a processor is provided. The processor is configured to be coupled to a memory, and configured to perform the method in the first aspect, any possible manner of the first aspect, or all possible manners of the first aspect.

According to a thirteenth aspect, a processor is provided. The processor is configured to be coupled to a memory, and configured to perform the method in the second aspect, any possible manner of the second aspect, or all possible manners of the second aspect.

According to a fourteenth aspect, a chip system is provided. The chip system includes a processor, and may further include a memory. The processor is configured to execute a computer program or instructions stored in the memory, to enable the chip system to implement the method in any one of the first aspect or the second aspect, or the possible implementations of the first aspect or the second aspect. The chip system may include a chip, or may include a chip and another discrete device.

According to a fifteenth aspect, a computer program product storing computer-readable instructions is provided. When the computer-readable instructions are run on a computer, the computer is enabled to perform the method in the first aspect, any possible manner of the first aspect, or all possible manners of the first aspect.

According to a sixteenth aspect, a computer program product storing computer-readable instructions is provided. When the computer-readable instructions are run on a computer, the computer is enabled to perform the method in the second aspect, any possible manner of the second aspect, or all possible manners of the second aspect.

According to a seventeenth aspect, a communication system is provided, including at least one communication apparatus according to the third aspect and/or at least one communication apparatus according to the fourth aspect. The communication system is configured to implement the method in the first aspect or the second aspect, any possible manner of the first aspect or the second aspect, or all possible implementations of the first aspect or the second aspect.

## BRIEF DESCRIPTION OF DRAWINGS

FIG. 1 is a diagram of an architecture of a communication system to which an embodiment of this application is applicable;

FIG. 2 is a diagram of a resource structure;

FIG. 3 is a diagram of a communication method according to an embodiment of this application;

FIG. 4 is a diagram of an S-SSB sending resource according to an embodiment of this application;

FIG. 5 is a diagram of an S-SSB sending method according to an embodiment of this application;

FIG. 6 is a diagram of an S-SSB sending resource and feedback resource according to an embodiment of this application;

FIG. 7 is a block diagram of a communication apparatus according to an embodiment of this application; and

FIG. 8 is a block diagram of another communication apparatus according to an embodiment of this application.

## DESCRIPTION OF EMBODIMENTS

The following describes technical solutions of this application with reference to accompanying drawings.

The technical solutions in embodiments of this application may be applied to various communication systems, for example, a 5G (5th generation (5th generation, 5G)) or new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation mobile communication system. The technical solutions provided in this application may be further applied to device-to-device (device to device, D2D) communication, vehicle-to-everything (vehicle-to-everything, V2X) communication, machine-to-machine (machine to machine, M2M) communication, machine type communication (machine type communication, MTC), an internet of things (internet of things, IoT) communication system, or another communication system.

In addition, the technical solutions provided in embodiments of this application may be applied to a link between a network device and a terminal device, or may be applied to a link between devices, for example, a device-to-device (device to device, D2D) link. The D2D link may also be referred to as a sidelink. The sidelink may also be referred to as a side link, a secondary link, or the like. In embodiments of this application, the D2D link, the side link, and the secondary link have a same meaning, and each mean a link established between devices of a same type. The link between the devices of the same type may be a link between terminal devices, a link between network devices, a link between relay nodes, or the like. This is not limited in embodiments of this application. For the link between terminal devices, there is a D2D link defined in release (release, Re1)-12/13 of the 3rd generation partnership project (3rd generation partnership project, 3GPP), and there is also a vehicle-to-everything link defined by the 3GPP for the internet of vehicles. It should be understood that V2X specifically further includes direct communication of vehicle-to-vehicle (vehicle-to-vehicle, V2V), vehicle-to-infrastructure (vehicle-to-infrastructure, V2I), and vehicle-to-pedestrian (vehicle-to-pedestrian, V2P), and a vehicle-to-network (vehicle-to-network, V2N) or vehicle-to-any entity V2X link, including a V2X link in Rel-14/15. V2X further includes an NR system-based V2X link in Rel-16 and later releases that are currently being studied by the 3GPP, and the like. V2V means communication between vehicles. V2P means communication between a vehicle and a person (including a pedestrian, a cyclist, a driver, or a passenger). V2I means communication between a vehicle and an infrastructure. The infrastructure is, for example, a roadside unit (road side unit, RSU) or a network device. In addition, V2N may be included in V2I, and V2N means communication between a vehicle and a network device. The RSU includes two types: a terminal-type RSU and a base station-type RSU. Because the terminal-type RSU is deployed on a road side, the terminal-type RSU is in a non-mobile state, and mobility does not need to be considered. The base station-type RSU may provide timing synchronization and resource scheduling for a vehicle that communicates with the base station-type RSU.

The following provides a diagram of an architecture of a mobile communication system to which embodiments of this application are applied.

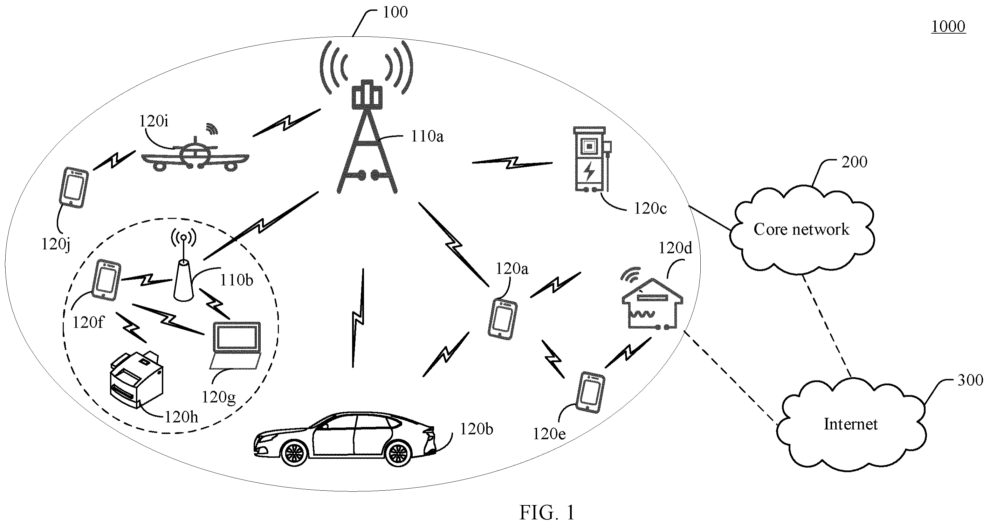

FIG. 1 is a diagram of an architecture of a communication system 1000 to which an embodiment of this application is applicable. As shown in FIG. 1, the communication system includes a radio access network 100. Optionally, the communication system 1000 may further include a core network 200 and an internet 300. The radio access network 100 may include at least one radio access network device (for example, 110a and 110b in FIG. 1), and may further include at least one terminal (for example, 120a to 120j in FIG. 1). The terminal is connected to the radio access network device in a wireless manner. The radio access network device is connected to the core network in a wireless or wired manner. A core network device and the radio access network device may be independent and different physical devices, or functions of the core network device and logical functions of the radio access network device are integrated into a same physical device, or some functions of the core network device and some functions of the radio access network device are integrated into one physical device. A wired or wireless manner may be used for connection between terminals and between radio access network devices. FIG. 1 is merely schematic. The communication system may further include other network devices, for example, may further include a wireless relay device and a wireless backhaul device, which are not shown in FIG. 1.

It should be understood that in the communication system in this application, an information transmit end may be a network device or a terminal device, and an information receive end may be a network device or a terminal device. This is not limited in this application.

In embodiments of this application, a UE may be referred to as a terminal device, a terminal apparatus, an access terminal, a subscriber unit, a subscriber station, a mobile station, a mobile console, a remote station, a remote terminal, a mobile device, a user terminal, a terminal, a wireless communication device, a user agent, or a user apparatus.

The terminal device may be a device that provides a user with voice/data. For example, the terminal device may be a handheld device or a vehicle-mounted device with a wireless connection function. The terminal device may include a user equipment, and is sometimes referred to as a terminal, an access station, a UE station, a remote station, a wireless communication device, a user apparatus, or the like. The terminal device is configured to connect a person, an object, a machine, and the like, may be widely used in various scenarios, and includes, for example but not limited to, terminal devices in the following scenarios: cellular communication, D2D, V2X, machine-to-machine/machine type communication (machine-to-machine/machine-type communications, M2M/MTC), internet of things (internet of things, IoT), virtual reality (virtual reality, VR), augmented reality (augmented reality, AR), industrial control (industrial control), self-driving (self-driving), telemedicine (remote medical), a smart grid (smart grid), smart furniture, smart office, smart wearable, smart transportation, a smart city (smart city), an uncrewed aerial vehicle, and a robot. For example, the terminal device may be a mobile phone (mobile phone), a tablet computer (Pad), a computer having a wireless transceiver function, a VR terminal, an AR terminal, a wireless terminal in industrial control, a vehicle, a wireless communication module in a vehicle, a vehicle-mounted T-box (Telematics BOX), a roadside unit RSU, a wireless terminal in self-driving, a smart speaker in an IoT network, a wireless terminal device in telemedicine, a wireless terminal device in a smart grid, a wireless terminal device in transportation safety, a wireless terminal device in a smart city, a wireless terminal device in a smart home, or the like. This is not limited in embodiments of this application.

As an example instead of a limitation, in embodiments of this application, the terminal device may alternatively be a wearable device. The wearable device may also be referred to as a wearable intelligent device, and is a general term of a wearable device that is intelligently designed and developed for daily wear by using a wearable technology, for example, glasses, a glove, a watch, clothing, or shoes. The wearable device is a portable device that is directly worn on the body or integrated into clothes or an accessory of a user. The wearable device is not only a hardware device, but also implements a powerful function through software support, data exchange, and cloud interaction. Generalized wearable intelligent devices include full-featured and large-size devices that can implement complete or partial functions without depending on smartphones, such as smart watches or smart glasses, and devices that focus on only one type of application function and need to work with other devices such as smartphones, for example, various smart bands or smart jewelry for measuring physical signs. In addition, in embodiments of this application, the terminal device may alternatively be a terminal device in an IoT system. IoT is an important component in development of future information technologies. A main technical feature of the IoT is to connect an object to a network by using a communication technology, to implement an intelligent network of human-machine interconnection and thing-thing interconnection.

If various terminal devices described above are located in a vehicle (for example, placed in the vehicle or installed in the vehicle), the terminal devices may be all considered as vehicle-mounted terminal devices. For example, the vehicle-mounted terminal devices are also referred to as on-board units (on-board units, OBUs). The terminal device in this application may alternatively be a vehicle-mounted module, a vehicle-mounted assembly, a vehicle-mounted component, a vehicle-mounted chip, or an on-board unit that is built in a vehicle as one or more components or units. The vehicle uses the vehicle-mounted module, the vehicle-mounted assembly, the vehicle-mounted component, the vehicle-mounted chip, or the on-board unit that is built in the vehicle, to implement a method in this application.

It should be understood that a network device in the wireless communication system may be a device that can communicate with a terminal device. The network device may also be referred to as an access network device or a radio access network device. For example, the network device may be a base station. The network device in embodiments of this application may be a radio access network (radio access network, RAN) node (or device) that connects the terminal device to a wireless network. The base station may broadly cover the following various names, or may be replaced with the following names, for example, a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a master eNodeB (master eNodeB, MeNB), a secondary eNodeB (secondary eNodeB, SeNB), a multi-standard radio (multi standard radio, MSR) node, a home base station, a network controller, an access node, a wireless node, an access point (access point, AP), a transmission node, a transceiver node, a baseband unit (base band unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), a positioning node, and the like. The base station may be a macro base station, a micro base station, a relay node, a donor node, or the like, or a combination thereof. The base station may alternatively be a communication module, a modem, or a chip disposed in the foregoing device or apparatus. The base station may alternatively be a mobile switching center, a device that bears a base station function in D2D, V2X, and M2M communication, a network side device in a 6G network, a device that bears a base station function in a future communication system, or the like. The base station may support networks of a same access technology or different access technologies. A specific technology and a specific device form that are used for the network device are not limited in embodiments of this application.

In embodiments of this application, a function of the base station may alternatively be performed by a module (for example, a chip) in the base station, or may be performed by a control subsystem including the function of the base station. The control subsystem including the function of the base station herein may be a control center in the foregoing application scenarios, such as a smart grid, industrial control, smart transportation, and a smart city. A function of the terminal may be performed by a module (for example, a chip or a modem) in the terminal, or may be performed by an apparatus including the function of the terminal.

For ease of understanding this application, a random access procedure and related concepts are briefly described.

1. Resource: It may be understood as a time-frequency resource. According to the Rel-16/Rel-17 NR protocol, for a scheduling granularity of a physical sidelink control channel (physical sidelink control channel, PSCCH) and/or a physical sidelink shared channel (physical sidelink shared channel, PSSCH), a time-domain resource unit is one slot and a frequency-domain resource unit is one or more contiguous subchannels. A sending terminal apparatus may send sidelink information on the resource. One resource may carry three types of channels, namely, a PSCCH, a PSSCH, and a physical sidelink feedback channel (physical sidelink feedback channel, PSFCH), and signals such as a demodulation reference signal (demodulation reference signal, DMRS), a channel state information reference signal (channel state information reference signal, CSI-RS), a PT-RS (phase-tracking reference signal, phase-tracking reference signal), a sidelink synchronization signal block S-SSB, and a cyclic prefix extension (cyclic prefix extension or CP extension, CPE). The PSCCH carries first-stage SCI. The PSSCH carries second-stage SCI and/or data. The PSFCH carries feedback information. The sidelink information (or SL information) includes one or more of the PSCCH, the PSSCH, the PSFCH, the DMRS, the CSI-RS, the PT-RS, synchronization, and the CPE.

PSCCH: The PSCCH carries first-stage SCI. For ease of description, when no distinction is made, the PSCCH and the SCI have a same meaning. In time domain, the PSCCH occupies two or three OFDM symbols starting from a $2^{nd}$ sidelink symbol. In frequency domain, a PRB carrying the PSCCH starts from a lowest PRB of a lowest subchannel of an associated PSSCH, and a quantity of PRBs occupied by the PSCCH is within a subband range of one PSSCH. The PSCCH includes a plurality of RBs. A quantity of the RBs falls within {10, 12, 15, 20, 25} and is indicated by RRC signaling or preconfigured.

PSSCH: The PSSCH carries at least two of second-stage SCI, a MAC CE, and data. The SCI may be first-stage SCI and/or second-stage SCI. For ease of description, when no distinction is made, the SCI is any one of first-stage SCI, second-stage SCI, or first-stage SCI and second-stage SCI. In time domain, on a resource without a PSFCH, 12 symbols are used to carry the PSSCH; and on a resource with a PSFCH, 9 symbols are used to carry the PSSCH. In frequency domain, the PSSCH occupies LsubCh contiguous subchannels. In addition, in one slot, a $1^{st}$ OFDM symbol copies information sent on a 2nd symbol for automatic gain control (Automatic Gain Control, AGC).

PSFCH: The PSFCH carries feedback information. On a resource with the PSFCH, second-to-last and third-to-last OFDM symbols are used to carry the PSFCH. A signal on the third-to-last symbol is repetition of a signal on the second-to-last symbol, to help a receiving terminal apparatus perform AGC adjustment.

Gap symbol: In addition, a terminal apparatus may respectively receive and send a PSSCH in two consecutive slots, or the terminal apparatus may respectively receive and send a PSSCH and a PSFCH in a same slot. Therefore, an additional symbol needs to be added after a PSSCH and after a PSFCH symbol for transmit/receive conversion of the terminal apparatus.

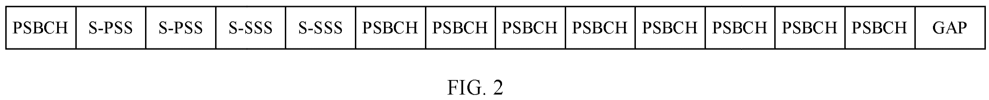

For example, FIG. 2 shows a resource structure. The resource carries a PSBCH, an S-PSS, an S-SSS, and a gap symbol.

2. Time-domain resource unit and frequency-domain resource unit:

The time-domain resource unit includes a symbol (symbol), a slot (slot), a mini-slot (mini-slot), a partial slot (partial slot), a subframe (sub-frame), a radio frame (frame), a sensing slot (sensing slot), or the like.

The frequency-domain resource unit includes a resource element (resource element, RE), a resource block (resource block, RB), an RB set (RB set), a subchannel (subchannel), a resource pool (resource pool), a bandwidth part (bandwidth part, BWP), a carrier (carrier), a channel (channel), an interlace (interlace), or the like.

For ease of description, in this specification, a resource for transmitting a PSCCH/PSSCH is described by using an example in which a time domain resource is a slot and a frequency domain resource is a subchannel or an interlace.

3. S-SSB:

As a type of synchronization message, it is used for synchronization between communication apparatuses, for example, synchronization between a base station and UE. The sidelink synchronization signal block may also be referred to as an SL synchronization signal block, or means a synchronization signal block sent or received on a sidelink. FIG. 2 shows a frame structure of the S-SSB, including a sidelink primary synchronization signal (sidelink primary synchronization signal, S-PSS), a sidelink secondary synchronization signal (sidelink secondary synchronization signal, S-SSS), a physical sidelink broadcast channel (physical sidelink broadcast channel, PSBCH), and a gap symbol (GAP).

There are two types of sequences for the S-PSS in the S-SSB. When a sequence for the S-PSS is given, there are 336 types of sequences for the S-SSS. Therefore, a total of 672 sidelink synchronization signal block identifiers (sidelink synchronization signal identifiers, SL-SSIDs) can be determined based on the types of sequences for the S-PSS and the S-SSS. The SL-SSID is expressed as follows:

$$N_{ID}^{SL} = N_{ID,1}^{SL} + 336 N_{ID,2}^{SL}$$

$$N_{ID,1}^{SL} \in \{0, 1, \ldots, 335\} \text{ and } N_{ID,2}^{SL} \in \{0, 1\}.$$

The SL-SSIDs are divided into two sets: an id_net set $N_{ID}^{SL} = 0, 1, \ldots, 335$ and an id_oon set $N_{ID}^{SL} = 336, 337, \ldots, 671$.

The following functions can be implemented by configuring different SL-SSIDs for S-SSBs:

① Identify a type of synchronization source. Currently, synchronization sources include a global navigation satellite system (global navigation satellite system, GNSS), a gNB, a reference UE, and the like. Different SL-SSIDs are configured for different S-SSBs, so that a receive end UE is capable of identifying the type of synchronization source. For example, when the SL-SSID is 0 or 336, the SL-SSID may indicate that the type of synchronization source is the GNSS.

② Identify whether the synchronization source is in or out of coverage. For example, a synchronization source in coverage of a cell may use SL-SSIDs ranging from 1 to 335, and a synchronization source out of coverage of a cell may use SL-SSIDs ranging from 337 to 671.

③ Identify whether a transmit end UE is directly or indirectly connected to the synchronization source. For example, when sending the S-SSB, the transmit end UE may use an SL-SSID based on whether the transmit end UE is directly or indirectly connected to the synchronization source. If the transmit end UE is directly connected to the synchronization source, the used SL-SSID reflects a high synchronization priority. If the transmit end UE is indirectly connected to the synchronization source, the used SL-SSID reflects a low synchronization priority.

Currently, conditions for sending the S-SSB are as follows:

If the UE is in coverage (in coverage, IC) on a frequency used for SL communication and selects the GNSS or a cell as a synchronization reference source; or if the UE is out of coverage (out of coverage, OOC) on the frequency used for SL communication and selects the GNSS or a cell as a synchronization reference source, and an SL frequency of the UE is in a frequency list configured by a network, and further, if the UE is in RRC connected mode and *networkControlledSyncTx* is configured and set to *on*, or if *networkControlledSyncTx* is not configured, a threshold *syncTxThreshIC* is configured, and an RSRP measurement result of a reference cell is less than the threshold *syncTxThreshIC*, the S-SSB is sent.

If the UE is neither in coverage on the frequency used for SL communication nor out of coverage on the frequency used for SL communication, *syncTxThreshOoC* is configured, the UE is not directly synchronized to the GNSS, and the UE does not select a synchronization reference UE or a PSBCH-RSRP measurement result of a selected synchronization reference UE is less than the threshold *syncTxThreshOoC,* or the UE selects the GNSS as a synchronization reference source, the S-SSB is sent.

The conditions for sending the S-SSB may also be expressed as follows:

1> if the UE is in coverage on a frequency used for SL communication and selects a GNSS or a cell as a synchronization reference source; or

1> if the UE is out of coverage on the frequency used for SL communication and selects a GNSS or a cell as a synchronization reference source, and an SL frequency of the UE is in a frequency list configured by a network:

2> if the UE is in RRC connected mode and *networkControlledSyncTx* is configured and set to *on*; or

2> if *networkControlledSyncTx* is not configured, a threshold *syncTxThreshIC* is configured, and an RSRP measurement result of a reference cell is less than the threshold *syncTxThreshIC*:

3> send the S-SSB;

1> else:

2> if *syncTxThreshOoC* is configured, the UE is not directly synchronized to the GNSS, and the UE does not select a synchronization reference UE or a PSBCH-RSRP measurement result of a selected synchronization reference UE is less than the threshold *syncTxThreshOoC*; or

2> if the UE selects the GNSS as the synchronization reference source:

3> send the S-SSB.

Synchronization signal priorities of SSBs are shown in Table 1. PX represents a priority group X (priority group X). X = 0, 1, ..., 6. *inCoverage* is a parameter in *MasterInformationBlockSidelink*. Its value is *true* or *false.*

An example of the *MasterInformationBlockSidelink* field is as follows:

```
MasterInformationBlockSidelink ::=      SEQUENCE {
    sl-TDD-Config-r16               BIT STRING (SIZE (12)),
    inCoverage-r16                  BOOLEAN,
    directFrameNumber-r16           BIT STRING (SIZE (10)),
    slotIndex-r16                   BIT STRING (SIZE (7)),
    reservedBits-r16                BIT STRING (SIZE (2))
}
```

where *inCoverage* indicates whether the UE is in coverage of a network or whether the GNSS is selected as a synchronization source.

Table 1 Priority indication manners for different synchronization sources

| Priority | GNSS-based synchronization | gNodeB/eNodeB-based synchronization |
|---|---|---|
| P0 | GNSS | gNB/eNB |

(continued)

| Priority | GNSS-based synchronization | gNodeB/eNodeB-based synchronization |
|---|---|---|
| P1 | $N_{ID}^{SL} = 0$<br>*inCoverage = true*<br><br>$N_{ID}^{SL} = 0$<br>The SSB is sent in a slot indicated by *sl-SSB-TimeAllocation3.* | $N_{ID}^{SL} \in \{1,\dots,335\}$<br>*inCoverage = true* |
| P2 | $N_{ID}^{SL} = 0$<br>*inCoverage = false*<br>The SSB is not sent in a slot indicated by *sl-SSB-TimeAllocation3.*<br><br>$N_{ID}^{SL} = 337$<br>*inCoverage = false* | $N_{ID}^{SL} \in \{1,\dots,335\}$<br>*inCoverage = false* |
| P3 | gNB/eNB | GNSS |
| P4 | $N_{ID}^{SL} \in \{1,\dots,335\}$<br>*inCoverage = true* | $N_{ID}^{SL} = 0$<br>*inCoverage = true*<br><br>$N_{ID}^{SL} = 0$<br>*inCoverage = true*<br>The SSB is sent in a slot indicated by *sl-SSB-TimeAllocation3.* |
| P5 | $N_{ID}^{SL} \in \{1,\dots,335\}$<br>*inCoverage = false* | $N_{ID}^{SL} = 0$<br>*inCoverage = false*<br>The SSB is not sent in a slot indicated by *sl-SSB-TimeAllocation3.*<br><br>$N_{ID}^{SL} = 337$<br>*inCoverage = false* |
| P6 | Others | Others |

Currently, a manner of determining the SL-SSID and a position for sending the S-SSB is as follows:
If the UE is in coverage on a frequency used for SL communication and selects a GNSS or a cell as a synchronization reference source, or if the UE is out of coverage on the frequency used for SL communication and selects a GNSS or a cell as a synchronization reference source, and an SL frequency of the UE is in a frequency list configured by a network:

Case 1: If the UE selects the GNSS as the synchronization reference source, the SL-SSID is 0, and the position for sending the S-SSB is a slot corresponding to *sl-SSB-TimeAllocationI* on a frequency on which a configuration includes *txParameters* and *gnss-Sync.*
Case 2: If the UE selects the cell as the synchronization reference source, the SL-SSID is an SL-SSID configured on a selected frequency, and a configuration on the frequency includes *txParameters* but does not include *gnss-Sync*; and a slot corresponding to *sl-SSB- TimeAllocation1* is used to send the S-SSB.

If the UE is neither in coverage nor out of coverage on the frequency used for SL communication, and if the UE has no serving cell and selects the GNSS as the synchronization reference source, the SL-SSID is 0. In this case, a slot for sending the S-SSB has the following possibilities:

Possibility 1: If *sl-SSB-TimeAllocation3* is included in a preconfiguration, a slot corresponding to *sl-SSB-TimeAllocation3* is used to send the S-SSB.

Possibility 2: Otherwise, the slot corresponding to *sl-SSB- TimeAllocationl* is used to send the S-SSB.

If the SL frequency of the UE is neither in coverage on the frequency used for SL communication nor out of coverage on the frequency used for SL communication, there are the following cases:

Case A: The UE selects a synchronization reference UE.

Possibility 1: If *MasterInformationBlockSidelink* sent by the UE indicates that *inCoverage* is *true,* or *MasterInformationBlockSidelink* sent by the UE indicates that *inCoverage* is *false* and the SL-SSID falls within a set defined for OOC, the SL-SSID is an SL-SSID of the synchronization reference UE, and the position for sending the S-SSB may be a slot corresponding to *sl-SSB-TimeAllocationl* or *sl-SSB-TimeAllocation2,* and is different from that of the synchronization reference UE.

Possibility 2: If the UE uses the slot corresponding to *sl-SSB-TimeAllocation3* in the preconfiguration, the SL-SSID is 337, and the position for sending the S-SSB is the slot corresponding to *sl-SSB-TimeAllocation2.*

Possibility 3: The SL-SSID is the SL-SSID of the synchronization reference UE plus 336. The position for sending the S-SSB is the slot corresponding to *sl-SSB-TimeAllocationl* or *sl-SSB-TimeAllocation2,* and is different from that of the synchronization reference UE.

Case B: If the UE does not select a synchronization reference UE and does not randomly select an SL-SSID, an SL-SSID is randomly selected from 338 to 671 using a uniform distribution, and the position for sending the S-SSB is randomly selected from the slots corresponding to *sl-SSB-TimeAllocation1* and *sl-SSB-TimeAllocation2.*

The manner of determining the SL-SSID and the position for sending the S-SSB may also be expressed as follows:

1> if the UE is in coverage on a frequency used for SL communication and selects a GNSS or a cell as a synchronization reference source; or
1> if the UE is out of coverage on the frequency used for SL communication and selects a GNSS or a cell as a synchronization reference source, and an SL frequency of the UE is in a frequency list configured by a network:

2> if the UE selects the GNSS as the synchronization reference source:

3> the SL-SSID is 0;
3> a slot corresponding to *sl-SSB- TimeAllocation1* on a frequency on which a configuration includes *txParameters* and *gnss-Sync* is used to send the S-SSB;

2> if the UE selects the cell as the synchronization reference source:

3> the SL-SSID is an SL-SSID configured on a selected frequency, and a configuration on the frequency includes *txParameters* but does not include *gnss-Sync*;
3> the slot corresponding to *sl-SSB- TimeAllocationl* is used to send the S-SSB;

1> else if the UE has no serving cell and selects the GNSS as the synchronization reference source:

2> the SL-SSID is 0;
2> if a preconfiguration includes *sl-SSB-TimeAllocation3:*

3> a slot corresponding to *sl-SSB-TimeAllocation3* is used to send the S-SSB;

2> else:

3> the slot corresponding to *sl-SSB- TimeAllocationl* is used to send the S-SSB;

1> else:

2> if the UE selects a synchronization reference UE, and *MasterInformationBlockSidelink* sent by this UE indicates that *inCoverage* is *true;* or
2> if the UE selects a synchronization reference UE, *MasterInformationBlockSidelink* sent by this UE indicates that *inCoverage is false*, and the SL-SSID falls within a set defined for OOC:

3> the SL-SSID is an SL-SSID of the synchronization reference UE;
3> the slot corresponding to *sl-SSB-TimeAllocation1* or *sl-SSB-TimeAllocation2* is selected as the position, which is different from that of the synchronization reference UE;

2> else if the UE selects a synchronization reference UE, and this UE uses the slot corresponding to *sl-SSB-TimeAllocation3* in the preconfiguration:

3> the SL-SSID is 337;
3> the slot corresponding to *sl-SSB-TimeAllocation2* is selected;

2> else if the UE selects a synchronization reference UE:

3> the SL-SSID is an SL-SSID of the synchronization reference UE plus 336;
3> the slot corresponding to *sl-SSB- TimeAllocation1* or *sl-SSB-TimeAllocation2* is selected as the position, which is different from that of the synchronization reference UE;

2> else:

3> if the UE does not randomly select an SL-SSID;

4> an SL-SSID is randomly selected from 338 to 671 using a uniform distribution;
4> the position is randomly selected from the slots corresponding to *sl-SSB-*

*TimeAllocation1* and *sl-SSB-TimeAllocation2.*

4. Beam:

A beam (beam) and a beam pair (beam pair link, BPL) are introduced into a communication system. The beam is a communication resource. Beams may be classified into transmit beams and receive beams. A technology for forming a beam may be a beamforming technology or another technical means. Beamforming includes transmit beamforming and receive beamforming.

Transmit beam: A transmit beam is a beam that has spatial directivity and that is formed by a signal sent by a transmit end device by using a specific beamforming weight. In an uplink direction, the transmit end device may be a terminal. In a downlink direction, the transmit end device may be a network device.

Receive beam: A receive beam is a beam that has spatial directivity and that is formed by a signal received by a receive end device by using a specific beamforming weight. In the uplink direction, the receive end device may be a network device. In the downlink direction, the receive end device may be a terminal.

Transmit beamforming: When a transmit end device with an antenna array sends a signal, a specific amplitude and phase are set on each antenna element of the antenna array, so that the sent signal has specific spatial directivity, that is, the signal has high signal power in some directions, and has low signal power in some other directions. A direction with highest signal power is a direction of a transmit beam. The antenna array includes a plurality of antenna elements. The additional specific amplitude and phase are a beamforming weight.

Receive beamforming: When a receive end device with an antenna array receives a signal, a specific amplitude and phase are set on each antenna element of the antenna array, so that a power gain of the received signal is directional, that is, the power gain is high when the signal is received in some directions, and the power gain is low when the signal is received in some other directions. A direction with a highest power gain when the signal is received is a direction of a receive beam. The antenna array includes a plurality of antenna elements. The additional specific amplitude and phase are a beamforming weight.

Sending a signal by using a transmit beam means sending the signal by using a beamforming weight.

Receiving a signal by using a receive beam means receiving the signal by using a beamforming weight.

Different beams may be considered as different resources. Same information or different information may be sent by using (or through) different beams. A beam pair is established based on the concept of a beam. One beam pair usually includes one transmit beam of a transmit end device and one receive beam of a receive end device. It should be noted that in the following description, unless otherwise specified, a transmit beam is a transmit beam of a network device, and a receive beam is a receive beam of a terminal.

In a communication system such as a 5G new radio (new radio, NR) system, both a network device and a terminal may generate one or more transmit beams and one or more receive beams. Before data is transmitted, beam alignment needs to be performed.

5. Beam management:

As an important technology proposed for FR2 in 5G NR, beam management is a process in which a base station (Base Station, BS) and UE obtain and maintain a set of beams used for sending and receiving. It is a reference workflow for beamforming in a MIMO system. Beam management includes the following four technical points:

    ① Beam determination (beam determination): a process in which the BS or UE selects its transmit or receive beam.
    ② Beam measurement (beam measurement): a process in which the BS or UE measures a received beamforming signal.
    ③ Beam reporting (beam reporting): a process in which the UE reports a beam measurement result to the base station.
    ④ Beam sweeping (beam sweeping): a process in which the BS or UE sequentially selects, in a specified sweeping manner within a time period, a beam for sending or receiving, to cover a spatial area.

Beam management may be classified into three working states. Operations in the states are as follows:

    P-1: The UE measures a BS transmit beam set, and selects a BS transmit beam and a UE receive beam.
    P-2: Based on P-1, the UE measures a smaller BS transmit beam set, to improve a BS transmit beam.
    P-3: The UE measures a same BS transmit beam by using different receive beams, to improve a receive beam of the UE.

Based on the foregoing four technical points and the operations in the three states, downlink beam management is performed, and its basic procedure is as follows: The BS configures a maximum of 64 beam directions. Each beam direction corresponds to one synchronization signal block (synchronization signal block, SSB) and a time-frequency resource that should be used by the UE for beam reporting.

The SSB includes two types of synchronization signals: a primary synchronization signal (primary synchronization signal, PSS) and a secondary synchronization signal (secondary synchronization signal, SSS). Sequences of the two types of synchronization signals are generated based on a synchronization signal identifier (synchronization signal identifier, SSID). Specifically, the SSID corresponds to a physical cell identifier (physical-layer cell ID). The identifier is determined by using the following formula:

$$N_{ID}^{cell} = 3N_{ID}^{(1)} + N_{ID}^{(2)}$$

$N_{ID}^{(1)} \in \{0, 1, \ldots, 335\}$ and $N_{ID}^{(2)} \in \{0, 1, 2\}$. The sequence of the PSS is generated based on $N_{ID}^{(2)}$. The sequence of the SSS is generated based on $N_{ID}^{(1)}$ and $N_{ID}^{(2)}$. After receiving the SSB, the UE performs blind detection on the PSS and the SSS to obtain corresponding $N_{ID}^{(1)}$ and $N_{ID}^{(2)}$ and then obtain $N_{ID}^{cell}$. Based on $N_{ID}^{cell}$ or corresponding SSIDs, the UE is capable of distinguishing between SSBs sent by various gNBs.

The BS sequentially sends an SSB in each direction in a sweeping manner, and the UE performs beam measurement to obtain a reference signal received power (reference signal received power, RSRP) of the SSB. The UE needs to establish a correspondence between the measured RSRP of the SSB and a 6-bit SSB sequence number. For this purpose, the UE obtains three least significant bits from a PBCH demodulation reference signal (demodulation reference signal, DMRS) and three most significant bits from PBCH payload (payload) bits, and combines the obtained bits to obtain a sequence number of the received SSB. The PBCH DMRS is generated based on a pseudo-random sequence. A manner of carrying the three least significant bits of the SSB sequence number is to determine an initial value c_init of the pseudo-random sequence by using the three bits. Specifically, a process of generating the PBCH DMRS is as follows:

$$r(n) = \frac{1}{\sqrt{2}}\big(1 - 2 \cdot c(2n)\big) + j\frac{1}{\sqrt{2}}\big(1 - 2 \cdot c(2n + 1)\big)$$

r(n) is a PBCH DMRS sequence. c(n) is the pseudo-random sequence and is determined by using the following formula:

$$c(n) = \big(x_1(n + N_C) + x_2(n + N_C)\big) \bmod 2$$

$$x_1(n + 31) = \big(x_1(n + 3) + x_1(n)\big)\bmod 2$$

$$x_2(n + 31) = \big(x_2(n + 3) + x_2(n + 2) + x_2(n + 1) + x_2(n)\big)\bmod 2$$

$N_C$ = 1600. $x_1(n)$ and $x_2(n)$ are two m-sequences. 31 initial values of $x_1(n)$ are $x_1(0) = 1$ and $x_1(n) = 0$. $n = 1, 2, \ldots$, 30. 31 initial values of $x_2(n)$ are determined by $c_{\text{init}} = \sum_{i=0}^{30} x_2(i) \cdot 2^i$. $c_{\text{init}}$ of the PBCH DMRS is set as follows:

$$c_{\text{init}} = 2^{11}(\bar{i}_{\text{SSB}} + 1)\big(\lfloor N_{\text{ID}}^{\text{cell}}/4\rfloor + 1\big) + 2^6(\bar{i}_{\text{SSB}} + 1) + \big(N_{\text{ID}}^{\text{cell}}\bmod 4\big)$$

$N_{\text{ID}}^{\text{cell}}$ is a physical cell identifier. If a maximum quantity of SSBs is 4, $\bar{i}_{\text{SSB}} = i_{\text{SSB}} + 4n_{\text{hf}}$. $i_{\text{SSB}}$ indicates two least significant bits of the SSB sequence number. $n_{\text{hf}}$ indicates whether the SSB is located in a front half or a rear half of a frame in which the SSB is located. If the SSB is located in the front half, $n_{\text{hf}} = 0$. If the SSB is located in the rear half, $n_{\text{hf}} = 1$.

If a maximum quantity of SSBs is 8 or 64, $\bar{i}_{\text{SSB}} = i_{\text{SSB}}$, which indicates the three least significant bits of the SSB sequence number. The UE obtains the SSB sequence number by performing blind detection on the PBCH DMRS. Then, the UE selects an SSB set through RSRP comparison, and reports an SSB sequence number in the set and a corresponding RSRP to the base station on a given time-frequency resource. The base station performs beam determination by using reported information. In this way, an initial beam selection process is completed. A similar procedure is used for uplink beam management, but different reference signals are used.

In NR Uu, when the UE feeds back an optimal transmit beam of the base station, to enable the base station to receive the feedback, the base station needs to receive feedback information on a beam used to send an SSB. For example, when the base station sends the SSB on a beam 1, beam 2, ..., and beam 8 in a sweeping manner, the UE receives the SSB and determines that the strongest beam used to send the SSB is the beam 2. When the optimal beam is fed back, the base station needs to receive the feedback information on the beam 2 used to send the SSB.

A specific procedure is as follows: SSB index (optimal downlink beam) information is carried to an NR base station through a mapping relationship between an SSB index and a PRACH resource. That is, a time domain position for sending each SSB corresponds to a time domain position for feeding back a PRACH resource. In this way, when the UE sends feedback at a PRACH feedback position, the base station can receive the feedback on a beam used to send the SSB. An NR PRACH time domain position is flexible. It supports different periods (10/20/40/80/160 ms), frame numbers, subframe numbers, start symbols, and the like. Various configuration options are defined in a protocol. One SSB sending slot corresponds to one PRACH sending slot of the UE.

6. Beam failure detection (beam failure detection, BFD) and beam failure recovery (beam failure recovery, BFR):

For example, a terminal device is a UE and a network device is a gNB. The BFR is a process in which after obtaining, through detection according to a BFD criterion configured by the gNB, that a serving beam (serving beam) fails, the UE attempts to replace the serving beam with an available candidate beam (candidate beam), so that a transmit and receive beam pair becomes available again. For an NR Uu interface, the serving beam is a beam that transmits a wanted signal between the gNB and the UE. The wanted signal includes a data signal, and further includes a reference signal used to perform BFD. The candidate beam is a beam that does not transmit the wanted signal but transmits a reference signal between the gNB and the UE to measure quality.

(1) BFD is performed. Currently, a condition for BFD is that all serving beams of the gNodeB are considered to fail N consecutive times. N is indicated by the beamfailureinstancemaxcount field, which represents a maximum quantity of beam failure instances, in radio resource control (radio resource control, RRC) signaling. A criterion for considering that the serving beam fails is that a hypothetical (hypothetical) physical downlink control channel (physical downlink control channel, PDCCH) block error rate (BLER) corresponding to a reference signal received power (reference signal received power, RSRP) of a reference signal transmitted on the serving beam and used to detect a beam failure is greater than a given threshold that is a default BLER threshold used for declaration of being out-of-sync (out-of-sync) in radio link monitoring (radio link monitoring, RLM).

(2) A new candidate beam is identified. Specifically, the gNB sends reference signals on a series of candidate beams, to help the UE select a candidate beam from the candidate beams as a new serving beam, to recover a transmit and receive beam pair of a connection. The reference signal sent by the gNB on the candidate beam is, for example, a channel state information reference signal (channel state information reference signal, CSI-RS) or a synchronization signal block (synchronization signal block, SSB). A specific reference signal is indicated by a candidate beam reference signal list (candidate beam RS list) field in RRC signaling. When finding that an RSRP of the reference signal sent on the candidate beam is greater than a configured threshold, the UE considers that the candidate beam is available, that is, the candidate beam may be used as the new serving beam. The threshold is explicitly or implicitly indicated by an RSRP-threshold SSB (rsrp-threshold SSB) field in the RRC signaling.

Step (1) may occur before step (2). Alternatively, step (1) may occur after step (2). Alternatively, steps (1) and (2) may simultaneously occur.

(3) The UE sends a beam failure recovery request to the gNB. The gNB receives the beam failure recovery request from the UE. The UE mainly sends the beam failure recovery request on a physical random access channel (physical random access channel, PRACH), or may send the beam failure recovery request on a physical uplink control channel (physical uplink control channel, PUCCH) in a sweeping manner. If the UE identifies an available candidate beam, the beam failure recovery request includes information about the available candidate beam. If the UE does not identify an available candidate beam, the UE does not send the beam failure recovery request. If the UE does not send the beam failure recovery request, the UE notifies a higher layer of the UE, to indicate that the UE is in a beam failure state. In addition, if the UE does not send the beam failure recovery request, the gNB cannot receive the beam failure recovery request from the UE, and the gNB also notifies a higher layer of the gNB, to indicate that the gNB is in a beam failure state. The higher layer of the UE and the higher layer of the gNB may perform beam recovery.

(4) The UE monitors a response of the gNB to the beam failure recovery request. If the UE sends the beam failure recovery request to the gNB, the UE may start a time window, and monitor the response of the gNB to the beam failure recovery request within the time window. If a response from the gNB is received within the time window, the UE determines that BFR is successful. If no response from the gNB is received within the time window, the UE may resend the beam failure recovery request. When the beam failure recovery request is repeatedly sent for a specific quantity of times but no response from the gNB is received, the UE notifies the higher layer of the UE, to indicate that the UE is in the beam failure state. The higher layer of the UE and the higher layer of the gNB may perform beam recovery.

In the foregoing manner, it can be learned that currently, beam management for FR2 is designed for a BS and UE. However, in an SL system, two communication parties may be UEs or the like. Current S-SSBs can be used only for synchronization, and cannot be used to distinguish between different UEs and different beam directions. Consequently, SL beam management cannot be completed by using the S-SSBs.

In view of this, an embodiment of this application provides a communication method. In the method, a source of an S-SSB is identified, so that a receive end of the S-SSB can determine a transmit end of the S-SSB, and an SL system is enabled, such as enabling initial synchronization and/or access of an FR2 beam in a distributed SL system.

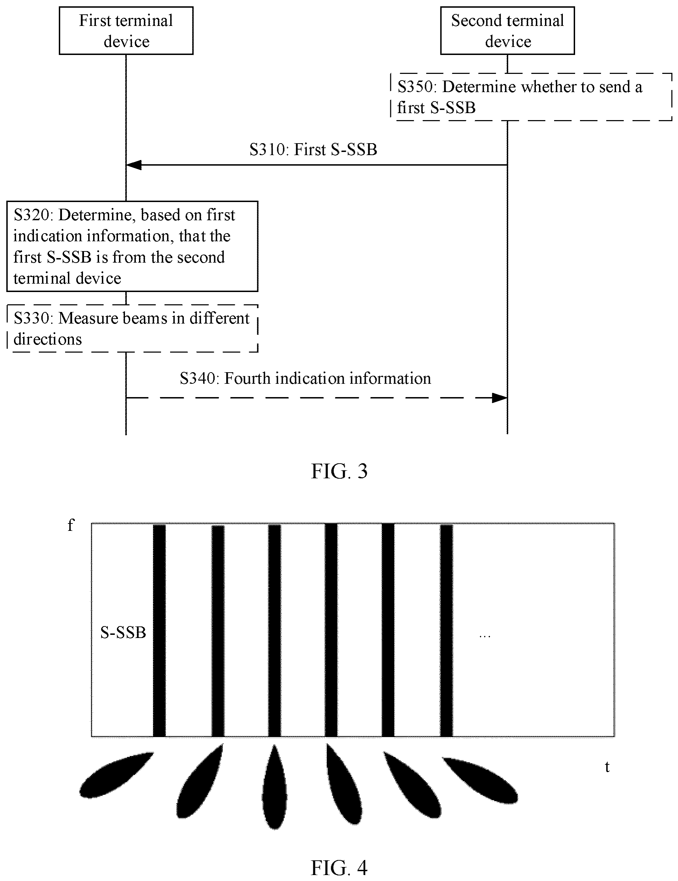

FIG. 3 is a diagram of the communication method.

Specifically, the communication method may include the following steps:

S310: A second terminal device sends a first sidelink synchronization signal block S-SSB to a first terminal device. Correspondingly, the first terminal device receives the first S-SSB.

The first S-SSB includes first indication information. The first indication information indicates the second terminal device.

In other words, the first indication information is carried in the S-SSB.

In a possible manner, the first indication information may be an identifier, for example, an ID. The identifier indicates the second terminal device. For example, the identifier may be a UE ID.

In a possible implementation, the UE ID may be preconfigured or predefined. For example, there may be a plurality of UEs in the SL system. To distinguish the plurality of UEs, different identifiers may be configured for the plurality of UEs. For example, it is assumed that there are three UEs in the SL system, and identifiers configured for the three UEs are 1, 2, and 3. Specifically, the identifier 1 indicates UE#A, the identifier 2 indicates UE#B, and the identifier 3 indicates UE#C. It should be understood that the plurality of UE IDs may be manually configured, or may be configured by a UE or a network device, for example, a base station.

It is assumed that the second terminal device is UE#1. In this case, the second terminal device sends S-SSB#A to the first terminal device. S-SSB#A carries an identifier of the second terminal device, namely, an identifier 1.

It should be understood that an example in which the UE ID is a number is used in the foregoing description. However, this application is not limited thereto. For example, the UE ID may alternatively take another form in which different UEs can be distinguished, such as a letter, a sequence, or a graph. All the other forms shall fall within the protection scope of this application.

In another possible implementation A, at least one field in the S-SSB may be used as identifier indication information (namely, the first indication information) of the terminal device.

Optionally, at least one or all of SL-SSIDs indicate terminal devices.

As described above, there are two types of sequences for an S-PSS in an S-SSB. When a sequence for the S-PSS is given, there are 336 types of sequences for an S-SSS. Therefore, a total of 672 SL-SSIDs can be determined based on the types of sequences for the S-PSS and the S-SSS. The SL-SSID is expressed as follows:

$$N_{ID}^{SL} = N_{ID,1}^{SL} + 336 N_{ID,2}^{SL}$$

$N_{ID,1}^{SL} \in \{0, 1, \ldots, 335\}$ and $N_{ID,2}^{SL} \in \{0, 1\}$. $N_{ID,1}^{SL}$ is an index value set of the S-SSS. $N_{ID,2}^{SL}$ is an index value set of the S-PSS. $N_{ID}^{SL}$ is a value set of the SL-SSID.

The SL-SSIDs are divided into two sets: an id_net set $N_{ID}^{SL} = 0, 1, \ldots, 335$ and an id_oon set $N_{ID}^{SL} = 336, 337, \ldots, 671$.

According to Table 1, synchronization information needs to be indicated through some of the SL-SSIDs, such as the following six types: {0}, {1,... , 335}, {336}, {337}, {337,..., 671}, and {338,..., 671}.

Case A:

To carry both the synchronization information and UE ID information in the SL-SSID, the SL-SSID is extended to:

$$N_{ID}^{SL} = N_{ID,1}^{SL} + 336 N_{ID,2}^{SL}$$

$N_{ID,2}^{SL} \in \{0, 1, 2\}$ and $N_{ID,1}^{SL} \in \{0, 1, \ldots, 335\}$. That is, there are three types of sequences for the S-PSS. When the sequence for the S-PSS is given, there are 336 types of sequences for the S-SSS. In this case, a total quantity of values of $N_{ID}^{SL}$ is as follows: 336 x 3 = 1008. $N_{ID,1}^{SL}$ is further decomposed into:

$$N_{ID,1}^{SL} = N_{ID,11}^{SL} + 168 N_{ID,12}^{SL}$$

$N_{ID,12}^{SL} \in \{0, 1\}$ and $N_{ID,11}^{SL} \in \{0, 1, \ldots, 167\}$.

In this case, the synchronization information may be indicated through six combinations of $N_{ID,2}^{SL}$ and $N_{ID,12}^{SL}$, as shown in Table 2.

| Table 2 Correspondences of $N_{ID,2}^{SL}$ and $N_{ID,12}^{SL}$ with the synchronization information | | | | | | |
|---|---|---|---|---|---|---|
| $N_{ID,2}^{SL}$ | 0 | 1 | 2 | 0 | 1 | 2 |
| $N_{ID,12}^{SL}$ | 0 | 0 | 0 | 1 | 1 | 1 |
| Synchronization information $N_{ID}^{SL}$ | 0 | {1,...,335} | 336 | 337 | {337,...,671} | {338,...,671} |

In other words, all existing synchronization information can be indicated through $N_{ID,2}^{SL}$ and $N_{ID,12}^{SL}$. Therefore, IDs in a value set of $N_{ID,11}^{SL}$ do not indicate the synchronization information and all can be used as UE identifiers.

The following describes a manner of determining the SL-SSID. The SL-SSID includes SL-SSID1 and SL-SSID2. SL-SSID1 is represented by $N_{ID,11}^{SL}$. SL-SSID2 is represented by $N_{ID,2}^{SL}$ and $N_{ID,12}^{SL}$.

In a possible implementation, a value of the SL-SSID is associated with at least one of a location of the second terminal, a synchronization source, or a preconfigured slot.

Optionally, the value of the SL-SSID is determined based on at least one of the location of the second terminal, the

EP 4 664 784 A1

synchronization source, or the preconfigured slot.

For example:

If the second terminal device is in coverage on a frequency used for SL communication and selects a GNSS or a cell as a synchronization reference source, or if the second terminal device is out of coverage on the frequency used for SL communication and selects a GNSS or a cell as a synchronization reference source, and an SL frequency of the second terminal device is in a frequency list configured by a network:

Case 1: If the second terminal device selects the GNSS as the synchronization reference source, SL-SSID2 is 0, SL-SSID1 is randomly selected, and a position for sending the S-SSB is a slot corresponding to *sl-SSB-TimeAllocation1* on a frequency on which a configuration includes *txParameters* and *gnss-Sync*.

Case 2: If the second terminal device selects the cell as the synchronization reference source, SL-SSID1 is an SL-SSID configured on a selected frequency, a configuration on the frequency includes *txParameters* but does not include *gnss-Sync,* SL-SSID2 is 1, and a position for sending the S-SSB is a slot corresponding to *sl-SSB-Time-Allocation1.*

If the SL frequency of the second terminal device is neither in coverage on the frequency used for SL communication nor out of coverage on the frequency used for SL communication, for example, the second terminal device has no serving cell, for similar parts below, refer to descriptions herein. If the second terminal device has no serving cell and selects the GNSS as the synchronization reference source, SL-SSID2 is 0, and SL-SSID1 is randomly selected. In this case, a slot for sending the S-SSB has the following possibilities:

Possibility 1: If *sl-SSB-TimeAllocation3* is included in a preconfiguration, a slot corresponding to *sl-SSB-Time-Allocation3* is used to send the S-SSB.

Possibility 2: Otherwise, the slot corresponding to *sl-SSB-TimeAllocationl* is used to send the S-SSB.

If the SL frequency of the second terminal device is neither in coverage on the frequency used for SL communication nor out of coverage on the frequency used for SL communication, there are the following cases:

Case A: The second terminal device selects a synchronization reference UE.

Possibility 1: If *MasterInformationBlockSidelink* sent by the synchronization reference UE indicates that *inCoverage* is *true*, or *MasterInformationBlockSidelink* sent by the synchronization reference UE indicates that *inCoverage* is *false* and the SL-SSID falls within a set defined for OOC, SL-SSID2 is SL-SSID2 of the synchronization reference UE, SL-SSID1 is randomly selected, and the position for sending the S-SSB may be a slot corresponding to *sl-SSB-TimeAllocationl* or *sl-SSB-TimeAllocation2,* and is different from that of the synchronization reference UE.

Possibility 2: SL-SSID2 is SL-SSID2 of the synchronization reference UE plus 3, and SL-SSID1 is randomly selected. The position for sending the S-SSB may be the slot corresponding to *sl-SSB-TimeAllocationl* or *sl-SSB-TimeAllocation2,* and is different from that of the synchronization reference UE.

Possibility 3: The SL-SSID is the SL-SSID of the synchronization reference UE plus 336. The position for sending the S-SSB is the slot corresponding to *sl-SSB-TimeAllocationl* or *sl-SSB-TimeAllocation2,* and is different from that of the synchronization reference UE.

Case B: If the second terminal device does not select a synchronization reference UE, SL-SSID2 is 5, SL-SSID1 is randomly selected, and the position for sending the S-SSB is randomly selected from the slots corresponding to *sl-SSB-TimeAllocationl* and *sl-SSB-TimeAllocation2. $SL\text{-}SSID2_{IC} \in \{0, 1, 2\}$ and $SL\text{-}SSID2_{OOC} \in \{3, 4, 5\}$.*

The manner of determining the SL-SSID and the position for sending the S-SSB may also be expressed as follows:

Optionally, the manner of determining the SL-SSID is as follows, where the SL-SSID includes SL-SSID1 and SL-SSID2, SL-SSID1 is represented by $N_{ID,11}^{SL}$, and SL-SSID2 is represented by $N_{ID,2}^{SL}$ and $N_{ID,12}^{SL}$:

1> if the second terminal device is in coverage on a frequency used for SL communication and selects a GNSS or a cell as a synchronization reference source; or

1> if the second terminal device is out of coverage on the frequency used for SL communication and selects a GNSS or a cell as a synchronization reference source, and an SL frequency of the second terminal device is in a frequency list configured by a network:

2> if the second terminal device selects the GNSS as the synchronization reference source:

3> SL-SSID2 is 0, and SL-SSID1 is randomly selected;
3> optionally, a slot corresponding to *sl-SSB- TimeAllocationI* on a frequency on which a configuration includes *txParameters* and *gnss-Sync* is used to send the S-SSB;

2> if the second terminal device selects the cell as the synchronization reference source:

3> SL-SSID1 is an SL-SSID configured on a selected frequency, a configuration on the frequency includes *txParameters* but does not include *gnss-Sync,* and SL-SSID2 is 1;
3> optionally, the slot corresponding to *sl-SSB-TimeAllocation1* is used to send the S-SSB;

1> else if the second terminal device has no serving cell and selects the GNSS as the synchronization reference source:

2> SL-SSID2 is 0, and SL-SSID1 is randomly selected;

2> optionally, if a preconfiguration includes *sl-SSB-TimeAllocation3*:

3> a slot corresponding to *sl-SSB-TimeAllocation3* is used to send the S-SSB;

2> optionally, else:

3> the slot corresponding to *sl-SSB-TimeAllocation1* is used to send the S-SSB;

1> else:

2> if the second terminal device selects a synchronization reference UE, and *MasterInformationBlockSidelink* sent by the synchronization reference UE indicates that *inCoverage* is *true;* or
2> if the second terminal device selects a synchronization reference UE, *MasterInformationBlockSidelink* sent by the synchronization reference UE indicates that *inCoverage* is *false,* and the SL-SSID falls within a set defined for OOC:

3> SL-SSID2 is SL-SSID2 of the synchronization reference UE, and SL-SSID1 is randomly selected;
3> optionally, the slot corresponding to *sl-SSB-TimeAllocation1* or *sl-SSB-TimeAllocation2* is selected as the position, which is different from that of the synchronization reference UE;

2> else if the second terminal device selects a synchronization reference UE, and the synchronization reference UE uses the slot corresponding to *sl-SSB-TimeAllocation3* in the preconfiguration:

3> SL-SSID2 is 4, and SL-SSID1 is randomly selected;
3> optionally, the slot corresponding to *sl-SSB-TimeAllocation2* is selected;

2> else if the second terminal device selects a synchronization reference UE:

3> SL-SSID2 is SL-SSID2 of the synchronization reference UE plus 3, and SL-SSID1 is randomly selected;
3> optionally, the slot corresponding to *sl-SSB-TimeAllocation1* or *sl-SSB-TimeAllocation2* is selected as the position, which is different from that of the synchronization reference UE;

2> else:

3> SL-SSID2 is 5, and SL-SSID1 is randomly selected;
3> optionally, the position is randomly selected from the slots corresponding to *sl-SSB-TimeAllocationI* and *sl-SSB-TimeAllocation2.*

SL - SSID2$_{IC}$ ∈ {0,1, 2} and SL - SSID2$_{OOC}$ ∈ {3, 4, 5}.

Optionally, when sending the S-SSB, the UE may randomly select any number in the value set $N_{ID,11}^{SL}$, namely {0, 1,..., 167}, as its identifier. For example, the first terminal device selects 2 as its identifier, and the second terminal device selects 150 as its identifier.

Specifically, indication information of the identifier may be carried in indication information of the SL-SSID.

In other words, a first identifier is determined from at least one candidate identifier. Any candidate identifier in the at least one candidate identifier is a part of the SL-SSID. For example, the SL-SSID is indicated through Y bits, and the at least one candidate identifier is indicated through X bits in the Y bits. X is less than Y. A value range of the at least one candidate identifier is {0, 1, ..., 167}.

Specifically, it is assumed that indication information indicating $N_{ID}^{SL}$ is 8 bits (bits) in total, $N_{ID,2}^{SL}$ is 1 bit, and $N_{ID,1}^{SL}$ is 7 bits. $N_{ID,1}^{SL}$ is further decomposed. $N_{ID,11}^{SL}$ is 6 bits, and $N_{ID,12}^{SL}$ is 1 bit. In other words, the 8 bits indicating $N_{ID}^{SL}$ are decomposed into 6 bits indicating $N_{ID,11}^{SL}$ and 2 bits indicating $N_{ID,2}^{SL}$ and $N_{ID,12}^{SL}$.

Case B: The UE ID may alternatively be indicated without extending the SL-SSID.

For example:

$$N_{ID}^{SL} = N_{ID,1}^{SL} + 336 N_{ID,2}^{SL}$$

$$N_{ID,1}^{SL} = N_{ID,11}^{SL} + 168 N_{ID,12}^{SL}$$

$$N_{ID,11}^{SL} = N_{ID,111}^{SL} + 84 N_{ID,112}^{SL}$$

$$N_{ID,2}^{SL} \in \{0, 1\}, N_{ID,12}^{SL} \in \{0, 1\}, N_{ID,11}^{SL} \in \{0, 1, \dots, 167\}, \text{ and } N_{ID,112}^{SL} \in \{0, 1\}.$$

$N_{ID,111}^{SL} \in \{0, 1, \dots, 83\}$, used to represent the UE ID.

In this case, a manner of determining the SL-SSID is as follows: The SL-SSID includes SL-SSID1 and SL-SSID2. SL-SSID1 is represented by $N_{ID,11}^{SL}$. SL-SSID2 is represented by $N_{ID,2}^{SL}$ and $N_{ID,12}^{SL}$.

In a possible implementation, a value of the SL-SSID is associated with at least one of a location of the second terminal, a synchronization source, or a preconfigured slot.

Optionally, the value of the SL-SSID is determined based on at least one of the location of the second terminal, the synchronization source, or the preconfigured slot.

For example:

If the second terminal device is in coverage on a frequency used for SL communication and selects a GNSS or a cell as a synchronization reference source, or if the second terminal device is out of coverage on the frequency used for SL communication and selects a GNSS or a cell as a synchronization reference source, and an SL frequency of the second terminal device is in a frequency list configured by a network:

Case 1: If the second terminal device selects the GNSS as the synchronization reference source, SL-SSID2 is 0, SL-SSID1 is randomly selected, and a position for sending the S-SSB is a slot corresponding to *sl-SSB-TimeAllocation1* on a frequency on which a configuration includes *txParameters* and *gnss-Sync.*

Case 2: If the second terminal device selects the cell as the synchronization reference source, SL-SSID1 is an SL-SSID configured on a selected frequency, a configuration on the frequency includes *txParameters* but does not include *gnss-Sync,* SL-SSID2 is 1, and a position for sending the S-SSB is a slot corresponding to *sl-SSB-Time-Allocation1.*

If the SL frequency of the second terminal device is neither in coverage on the frequency used for SL communication nor out of coverage on the frequency used for SL communication, and if the second terminal device has no serving cell and selects the GNSS as the synchronization reference source, SL-SSID2 is 0, and SL-SSID1 is randomly selected. In this case, a slot for sending the S-SSB has the following possibilities:

Possibility 1: If *sl-SSB-TimeAllocation3* is included in a preconfiguration, a slot corresponding to *sl-SSB-Time-Allocation3* is used to send the S-SSB.

Possibility 2: Otherwise, the slot corresponding to *sl-SSB-TimeAllocationl* is used to send the S-SSB.

If the second terminal device is neither in coverage on the frequency used for SL communication nor out of coverage on the frequency used for SL communication, there are the following cases:

Case A: The second terminal device selects a synchronization reference UE.

Possibility 1: If *MasterInformationBlockSidelink* sent by the synchronization reference UE indicates that *inCoverage* is *true,* or *MasterInformationBlockSidelink* sent by the synchronization reference UE indicates that *inCoverage* is *false* and the SL-SSID falls within a set defined for OOC, SL-SSID2 is SL-SSID2 of the synchronization reference UE, SL-SSID1 is randomly selected, and the position for sending the S-SSB may be a slot corresponding to *sl-SSB-TimeAllocationl* or *sl-SSB-TimeAllocation2,* and is different from that of the synchronization reference UE.

Possibility 2: SL-SSID2 is SL-SSID2 of the synchronization reference UE plus 3 (or SL-SSID2 plus 4), and SL-SSID1 is randomly selected. The position for sending the S-SSB may be the slot corresponding to *sl-SSB-TimeAllocation1* or *sl-SSB-TimeAllocation2,* and is different from that of the synchronization reference UE.

Case B: If the UE does not select a synchronization reference UE, SL-SSID2 is 5, SL-SSID1 is randomly selected, and the position for sending the S-SSB is randomly selected from the slots corresponding to *sl-SSB-TimeAllocationl* and *sl-SSB-TimeAllocation2*. $SL\text{-}SSID2_{IC} \in \{0, 1, 2\}$ and $SL\text{-}SSID2_{OOC} \in \{3, 4, 5\}$; or $SL\text{-}SSID2_{IC} \in \{0, 1, 2, 3\}$ and $SL\text{-}SSID2_{OOC} \in \{4, 5, 6, 7\}$.

The manner of determining the SL-SSID and the position for sending the S-SSB may also be expressed as follows:

Optionally, the manner of determining the SL-SSID is as follows, where the SL-SSID includes SL-SSID1 and SL-SSID2, SL-SSID1 is represented by $N_{ID,111}^{SL}$, and SL-SSID2 is represented by $N_{ID,112}^{SL}$, $N_{ID,12}^{SL}$, and $N_{ID,2}^{SL}$:

1> if the second terminal device is in coverage on a frequency used for SL communication and selects a GNSS or a cell as a synchronization reference source; or
1> if the second terminal device is out of coverage on the frequency used for SL communication and selects a GNSS or a cell as a synchronization reference source, and an SL frequency of the second terminal device is in a frequency list configured by a network:

    2> if the second terminal device selects the GNSS as the synchronization reference source:

        3> SL-SSID2 is 0, and SL-SSID1 is randomly selected;
        3> optionally, a slot corresponding to *sl-SSB- TimeAllocationl* on a frequency on which a configuration includes *txParameters* and *gnss-Sync* is used to send the S-SSB;

    2> if the UE selects the cell as the synchronization reference source:

        3> SL-SSID1 is an SL-SSID configured on a selected frequency, a configuration on the frequency includes *txParameters* but does not include *gnss-Sync,* and SL-SSID2 is 1;
        3> optionally, the slot corresponding to *sl-SSB-TimeAllocation1* is used to send the S-SSB;

1> else if the second terminal device has no serving cell and selects the GNSS as the synchronization reference source:

    2> SL-SSID2 is 0, and SL-SSID1 is randomly selected;
    2> optionally, if a preconfiguration includes *sl-SSB-TimeAllocation3:*

        3> a slot corresponding to *sl-SSB-TimeAllocation3* is used to send the S-SSB;

    2> optionally, else:

        3> the slot corresponding to *sl-SSB- TimeAllocationl* is used to send the S-SSB;

1> else:

    2> if the second terminal device selects a synchronization reference UE, and *MasterInformationBlockSidelink* sent by the synchronization reference UE indicates that *inCoverage* is *true;* or
    2> if the second terminal device selects a synchronization reference UE, *MasterInformationBlockSidelink* sent by the synchronization reference UE indicates that *inCoverage* is *false*, and the SL-SSID falls within a set defined for OOC:

        3> SL-SSID2 is SL-SSID2 of the synchronization reference UE, and SL-SSID1 is randomly selected;

3> optionally, the slot corresponding to *sl-SSB-TimeAllocation1* or *sl-SSB-TimeAllocation2* is selected as the position, which is different from that of the synchronization reference UE;

2> else if the second terminal device selects a synchronization reference UE, and the synchronization reference UE uses the slot corresponding to *sl-SSB-TimeAllocation3* in the preconfiguration:

3> SL-SSID2 is 4, and SL-SSID1 is randomly selected;
3> optionally, the slot corresponding to *sl-SSB-TimeAllocation2* is selected;

2> else if the second terminal device selects a synchronization reference UE:

3> SL-SSID2 is SL-SSID2 of the synchronization reference UE plus 3 (or SL-SSID2 plus 4), and SL-SSID1 is randomly selected;
3> optionally, the slot corresponding to *sl-SSB-TimeAllocation1* or *sl-SSB-TimeAllocation2* is selected as the position, which is different from that of the synchronization reference UE;

2> else:

3> SL-SSID2 is 5, and SL-SSID1 is randomly selected;
3> optionally, the position is randomly selected from the slots corresponding to *sl-SSB-TimeAllocationl* and *sl-SSB-TimeAllocation2.*

SL - SSID2$_{IC}$ ∈ {0, 1, 2} and SL - SSID2$_{OOC}$ ∈ {3, 4, 5}; or SL - SSID2$_{IC}$ ∈ {0, 1, 2, 3} and SL - SSID2$_{OOC}$ ∈ {4, 5, 6, 7}.

In some implementations, the SL-SSID satisfies the following relation:

$$N_{ID}^{SL} = N_{ID,1}^{SL} + 336 N_{ID,2}^{SL}$$

$N_{ID}^{SL}$ is an index value set of the SL-SSID. $N_{ID,1}^{SL}$ is an index value set of the S-SSS. $N_{ID,1}^{SL} \in \{0, 1, \ldots, 335\}$. $N_{ID,2}^{SL}$ is an index value set of the S-PSS. $N_{ID,2}^{SL} \in \{0, 1, 2\}$ or $N_{ID,2}^{SL} \in \{0, 1\}$.

In other words, {0, 1, ..., 1007} or {0, 1, ..., 671} in the SL-SSIDs all indicate terminal devices, and synchronization information is carried in a PSBCH DMRS, to further reduce overheads and increase a quantity of indicated terminal devices.

Case C: Resources for carrying synchronization information and terminal device identifiers are distinguished.

For example, an identifier indicating the synchronization information is carried in a PSBCH DMRS, and an identifier indicating a UE is carried in an SL-SSID. For example, indexes such as {0}, {1, ..., 335}, {336}, {337}, {337, ..., 671}, and {338, ..., 671} are carried on a 3-bit resource of the PSBCH DMRS ($i_{SL\text{-}SSB\text{-}Index}$), and all 672 or 1008 SL-SSIDs are used to represent UE IDs.

For another example, a time domain resource is used to distinguish a UE ID or an ID indicating the synchronization information. For example, six time domain positions are configured in a system. {0}, {1,...,335}, {336}, {337}, {337,...,671}, and {338,...,671} need to be respectively sent at specific time domain positions.

In this case, a manner of determining the SL-SSID is as follows: The SL-SSID includes SL-SSID1 and SL-SSID2. SL-SSID1 is represented by $N_{ID}^{SL}$. SL-SSID2 is represented by $i_{SL\text{-}SSB\text{-}Index}$.

In a possible implementation, a value of the SL-SSID is associated with at least one of a location of the second terminal, a synchronization source, or a preconfigured slot.

Optionally, the value of the SL-SSID is determined based on at least one of the location of the second terminal, the synchronization source, or the preconfigured slot.

For example:
If the second terminal device is in coverage on a frequency used for SL communication and selects a GNSS or a cell as a synchronization reference source, or if the second terminal device is out of coverage on the frequency used for SL communication and selects a GNSS or a cell as a synchronization reference source, and an SL frequency of the second terminal device is in a frequency list configured by a network:

Case 1: If the second terminal device selects the GNSS as the synchronization reference source, SL-SSID2 is 0, SL-SSID1 is randomly selected, and a position for sending the S-SSB is a slot corresponding to sl-SSB-TimeAllocation1

on a frequency on which a configuration includes *txParameters* and *gnss-Sync.*

Case 2: If the second terminal device selects the cell as the synchronization reference source, SL-SSID1 is an SL-SSID configured on a selected frequency, a configuration on the frequency includes *txParameters* but does not include *gnss-Sync,* SL-SSID2 is 1, and a position for sending the S-SSB is a slot corresponding to *sl-SSB-Time-Allocation1.*

If the SL frequency of the second terminal device is neither in coverage on the frequency used for SL communication nor out of coverage on the frequency used for SL communication, and if the second terminal device has no serving cell and selects the GNSS as the synchronization reference source, SL-SSID2 is 0, and SL-SSID1 is randomly selected. In this case, a slot for sending the S-SSB has the following possibilities:

Possibility 1: If *sl-SSB-TimeAllocation3* is included in a preconfiguration, a slot corresponding to *sl-SSB-TimeAllocation3* is used to send the S-SSB.

Possibility 2: Otherwise, the slot corresponding to *sl-SSB-TimeAllocationl* is used to send the S-SSB.

If the second terminal device is neither in coverage on the frequency used for SL communication nor out of coverage on the frequency used for SL communication, there are the following cases:

Case A: The second terminal device selects a synchronization reference UE.

Possibility 1: If *MasterInformationBlockSidelink* sent by the synchronization reference UE indicates that *inCoverage* is *true,* or *MasterInformationBlockSidelink* sent by the synchronization reference UE indicates that *inCoverage* is *false* and the SL-SSID falls within a set defined for OOC, SL-SSID2 is SL-SSID2 of the synchronization reference UE, SL-SSID1 is randomly selected, and the position for sending the S-SSB may be a slot corresponding to *sl-SSB-TimeAllocationl* or *sl-SSB-TimeAllocation2,* and is different from that of the synchronization reference UE.

Possibility 2: If the synchronization reference UE uses the slot corresponding to *sl-SSB-TimeAllocation3* in the preconfiguration, SL-SSID2 is 4, SL-SSID1 is randomly selected, and the position for sending the S-SSB may be the slot corresponding to *sl-SSB-TimeAllocation2.*

Possibility 3: SL-SSID2 is SL-SSID2 of the synchronization reference UE plus 3 (or SL-SSID2 plus 4), and SL-SSID1 is randomly selected. The position for sending the S-SSB may be the slot corresponding to *sl-SSB-TimeAllocation1* or *sl-SSB-TimeAllocation2,* and is different from that of the synchronization reference UE.

Case B: If the second terminal device does not select a synchronization reference UE, SL-SSID2 is 5, SL-SSID1 is randomly selected, and the position for sending the S-SSB is randomly selected from the slots corresponding to *sl-SSB-TimeAllocationl* and *sl-SSB-TimeAllocation2.* $i_{SL\text{-}SSB\text{-}Index\text{-}IC} \in \{0, 1, 2\}$ and $i_{SL\text{-}SSB\text{-}Index\text{-}OOC} \in \{3, 4, 5\}$; or $i_{SL\text{-}SSB\text{-}Index\text{-}IC} \in \{0, 1, 2, 3\}$ and $i_{SL\text{-}SSB\text{-}Index\text{-}OOC} \in \{4, 5, 6, 7\}$.

The manner of determining the SL-SSID and the position for sending the S-SSB may also be expressed as follows:

1> if the second terminal device is in coverage on a frequency used for SL communication and selects a GNSS or a cell as a synchronization reference source; or

1> if the second terminal device is out of coverage on the frequency used for SL communication and selects a GNSS or a cell as a synchronization reference source, and an SL frequency of the second terminal device is in a frequency list configured by a network:

2> if the second terminal device selects the GNSS as the synchronization reference source:

3> SL-SSID2 is 0, and SL-SSID1 is randomly selected;
3> optionally, a slot corresponding to *sl-SSB- TimeAllocationl* on a frequency on which a configuration includes *txParameters* and *gnss-Sync* is used to send the S-SSB;

2> if the second terminal device selects the cell as the synchronization reference source:

3> SL-SSID1 is an SL-SSID configured on a selected frequency, a configuration on the frequency includes *txParameters* but does not include *gnss-Sync,* and SL-SSID2 is 1;
3> optionally, the slot corresponding to *sl-SSB-TimeAllocation1* is used to send the S-SSB;

1> else if the second terminal device has no serving cell and selects the GNSS as the synchronization reference source:

2> SL-SSID2 is 0, and SL-SSID1 is randomly selected;
2> optionally, if a preconfiguration includes *sl-SSB-TimeAllocation3:*

3> a slot corresponding to *sl-SSB-TimeAllocation3* is used to send the S-SSB;

2> optionally, else:

3> the slot corresponding to *sl-SSB- TimeAllocationl* is used to send the S-SSB;

1> else:

2> if the second terminal device selects a synchronization reference UE, and *MasterInformationBlockSidelink* sent by the synchronization reference UE indicates that *inCoverage* is *true;* or
2> if the second terminal device selects a synchronization reference UE, *MasterInformationBlockSidelink* sent by the synchronization reference UE indicates that *inCoverage* is *false*, and the SL-SSID falls within a set defined for OOC:

3> SL-SSID2 is SL-SSID2 of the synchronization reference UE, and SL-SSID1 is randomly selected;
3> optionally, the slot corresponding to *sl-SSB-TimeAllocation1* or *sl-SSB-TimeAllocation2* is selected as the position, which is different from that of the synchronization reference UE;

2> else if the second terminal device selects a synchronization reference UE, and the UE uses the slot corresponding to *sl-SSB-TimeAllocation3* in the preconfiguration:

3> SL-SSID2 is 4, and SL-SSID1 is randomly selected;
3> optionally, the slot corresponding to *sl-SSB-TimeAllocation2* is selected;

2> else if the second terminal device selects a synchronization reference UE:

3> SL-SSID2 is SL-SSID2 of the synchronization reference UE plus 3 (or SL-SSID2 plus 4), and SL-SSID1 is randomly selected;
3> optionally, the slot corresponding to *sl-SSB-TimeAllocation1* or *sl-SSB-TimeAllocation2* is selected as the position, which is different from that of the synchronization reference UE;

2> else:

3> SL-SSID2 is 5, and SL-SSID1 is randomly selected;
3> optionally, the position is randomly selected from the slots corresponding to *sl-SSB-TimeAllocationl* and *sl-SSB-TimeAllocation2.*

$i_{SL\text{-}SSB\text{-}Index\text{-}IC} \in \{0, 1, 2\}$ and $i_{SL\text{-}SSB\text{-}Index\text{-}OOC} \in \{3, 4, 5\}$; or $i_{SL\text{-}SSB\text{-}Index\text{-}IC} \in \{0, 1, 2, 3\}$ and $i_{SL\text{-}SSB\text{-}Index\text{-}OOC} \in \{4, 5, 6, 7\}$.

It should be understood that specific values of SL-SSID1 and S-SSID2 in the foregoing description are merely used as an example instead of a limitation.

In this way, different resources are associated with information types indicated by identifiers. Even if the identifiers are the same, the terminal device can also identify meanings indicated by the identifiers on the different resources. For example, an identifier obtained by the terminal device in a PSBCH DMRS represents synchronization information, or an identifier obtained by the terminal device at a specific time domain position represents synchronization information, and an identifier obtained at another position or on another resource represents non-synchronization information.

Considering that there may be a plurality of terminal devices in an SL system, the first S-SSB in S310 may belong to N S-SSBs. The N S-SSBs include N pieces of indication information. The first indication information belongs to the N pieces of indication information. The N pieces of indication information indicate N terminal devices corresponding to the N S-SSBs. Optionally, all the N terminal devices send the S-SSBs to the first terminal device. Correspondingly, the first terminal device receives the N S-SSBs.

Alternatively, the second terminal device sends the N S-SSBs to the first terminal device, and beam directions of the N S-SSBs are different from each other. In other words, the second terminal device sends S-SSBs in different beam directions to the first terminal device.

For example, as shown in FIG. 4, the second terminal device sends S-SSBs in different beam directions on a configured resource.

It should be understood that the second terminal device may send the S-SSBs to the first terminal device on a predefined, configured, or preconfigured time-frequency resource.

In a possible manner, the first indication information may be carried in a P-SSS and an S-SSS of the S-SSB.

In another possible manner, the first indication information may be carried in a P-SSS and an S-SSS of the S-SSB, and a PSBCH DMRS. It should be understood that in this case, the PSBCH DMRS does not carry second indication information. The second indication information is described in detail below. For example, all values of $N_{ID}^{SL}$ are candidate identifiers (672 or 1008 identifiers), and synchronization information is carried in the PSBCH DMRS (3 bits in total).

Optionally, when sending the N S-SSBs in different beam directions to the first terminal device, the second terminal device may separately indicate the beam directions of the S-SSBs to the first terminal device.

For example, the second terminal device further distinguishes between different beams of the same terminal device through an S-SSB index (index) (namely, the second indication information). In a possible implementation, the S-SSB index may be carried in the PSBCH DMRS.

For the PSBCH DMRS, a formula of a reference signal sequence r(m) is as follows:

$$r(m) = \frac{1}{\sqrt{2}}\big(1 - 2c(2m)\big) + j\frac{1}{\sqrt{2}}\big(1 - 2c(2m+1)\big)$$

c(n) is a pseudo-random sequence and is determined by using the following formula:

$$c(n) = \big(x_1(n + N_C) + x_2(n + N_C)\big)\mod 2$$

$$x_1(n + 31) = \big(x_1(n + 3) + x_1(n)\big)\mod 2$$

$$x_2(n + 31) = \big(x_2(n + 3) + x_2(n + 2) + x_2(n + 1) + x_2(n)\big)\mod 2$$

$N_C = 1600$. $x_1(n)$ and $x_2(n)$ are two m-sequences. 31 initial values of $x_1(n)$ are $x_1(0) = 1$ and $x_1(n) = 0$. $n = 1, 2, ..., 30$. 31 initial values of $x_2(n)$ are determined by $c_{init} = \sum_{i=0}^{30} x_2(i) \cdot 2^i$. To indicate the S-SSB index, a manner of setting $c_{init}$ is as follows:

$$c_{init} = f(i_{SL-SSB-Index}, N_{ID}^{SL})$$

In a possible implementation:

$$f(i_{SL-SSB-Index}, N_{ID}^{SL})$$
$$= 2^a(i_{SL-SSB-Index} + 1)(\lfloor N_{ID}^{SL}/4 \rfloor + 1) + 2^b(i_{SL-SSB-Index} + 1)$$
$$+ c(N_{ID}^{SL} \bmod 4)$$
$$(a, b, c) = \{(11, 6, 1), (11, 6, 0), (9, 4, 0), (11, 4, 0)\}.$$

Alternatively:

$$f(i_{SL-SSB-Index}, N_{ID}^{SL}) = 2^a i_{SL-SSB-Index} + 2^b N_{ID}^{SL}$$
$$(a, b) = \{(10, 0), (11, 0), (12, 0), (13, 0), (0, 3), (0, 4), (0, 5), (0, 6), (0, 7), (0, 8)\}.$$

In the foregoing formulas, $N_{ID}^{SL}$ represents the SL-SSID. Refer to the foregoing description. Details are not described herein again. $i_{SL-SSB-Index}$ is the S-SSB index carried in the PSBCH DMRS, which may be 3 bits or 4 bits in length and represent 8 or 16 different beams in total.

In other words, the second terminal device sends the S-SSB to the first terminal device, which carries an ID of the second terminal device. When the second terminal device sends S-SSBs to the first terminal device in a plurality of different beam directions, the PSBCH DMRS further carries SSB indexes corresponding to the different beam directions.

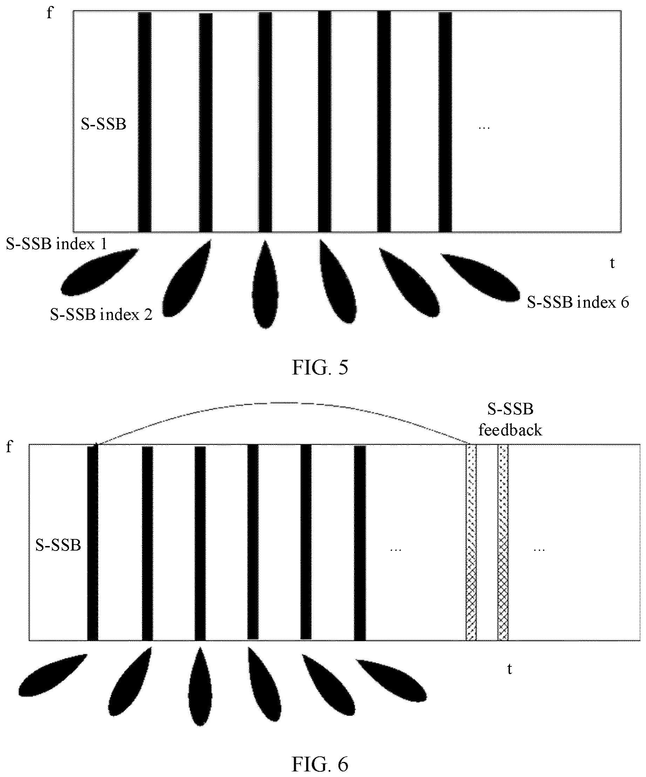

For example, as shown in FIG. 5, the second terminal device sequentially sends S-SSBs in different directions on a configured resource. The S-SSBs in different directions correspond to different SSB indexes.

In the foregoing case A, a terminal device may randomly select a number in {0, 1,..., 167} as its identifier. However, before, during, or after selection, different terminal devices do not negotiate with each other. Therefore, there is a possibility that different terminal devices select a same identifier. In other words, identifiers of different terminal devices conflict.

In an example in which the first terminal device is used as a receive end of the S-SSB, the first terminal device may determine, based on the following conditions, that identifiers of different terminal devices conflict:

① A UE ID indicated in the S-SSB received by the first terminal device is the same as a UE ID of the first terminal device.

② In a receiving process, the first terminal device receives S-SSBs with a same SSB index for a same UE ID in different beam directions.

For example, the first terminal device receives an SSB index twice for a same UE ID in one sweeping period of eight beam directions.

③ The first terminal device receives S-SSBs with different SSB indexes for a same UE ID in a same beam direction.

For example, the first terminal device receives both an SSB index 2 and an SSB index 6 in one beam direction.

④ In the receiving process, the first terminal device finds that a quantity of received S-SSBs with a same UE ID whose RSRPs exceed a threshold exceeds a first threshold, or a proportion of the quantity of received S-SSBs with the same UE ID whose RSRPs exceed the threshold in a total quantity of received S-SSBs exceeds a second threshold.

The first threshold and/or the second threshold may be predefined, preconfigured, or configured.

For example, when the first terminal device receives 10 S-SSBs, 3 of the S-SSBs correspond to a same UE ID, and the first threshold is 2, the first terminal device determines that 3 is greater than 2 and that identifiers of different terminal devices conflict. Alternatively, when the second threshold is 2/10, the first terminal device determines that 3/10 is greater than 2/10 and that identifiers of different terminal devices conflict.

When the first terminal device determines that UE IDs conflict, there may be the following manners of resolving the conflict:

Manner A: The receive end of the S-SSB reselects an identifier.

For example, if the receive end in the foregoing example is the first terminal device, the first terminal device reselects its identifier. For example, the first terminal device selects, from {0, 1,..., 167}, an identifier different from that in the received S-SSB. For example, the identifier in the S-SSB received by the first terminal device is 2. In other words, the ID of the second terminal device is 2. The first terminal device determines 89 as its identifier, to distinguish itself from the second terminal device.

Manner B: A transmit end of the S-SSB reselects an identifier.

To enable the transmit end of the S-SSB to reselect the identifier, the receive end of the S-SSB may send indication information (namely, third indication information) to the transmit end of the S-SSB after determining that identifiers, for example, UE IDs, of the transmit end and the receive end are the same. The indication information indicates that the identifiers conflict. In other words, the indication information indicates that the identifiers are the same, or the indication information indicates or triggers the transmit end of the S-SSB to reselect the identifier.

For example, content of the indication information may be a special UE ID. It should be understood that a meaning of the special UE ID needs to be able to be identified by both the transmit end and the receive end of the S-SSB. For example, the meaning of the special UE ID may be predefined, preconfigured, or configured.

Alternatively, the content of the indication information may be incorrect UE ID feedback information. For example, the receive end of the S-SSB simultaneously feeds back a plurality of pieces of information to the transmit end of the S-SSB.

It should be understood that the foregoing examples of the content of the indication information are not intended to be a limitation. For example, the content of the indication information may alternatively be other content. As long as the transmit end and the receive end of the S-SSB can trigger identifier reselection based on the indication information, the indication information shall fall within the protection scope of this application.

It should also be understood that there may be a plurality of transmit ends of S-SSBs. For example, there may be a plurality of terminal devices.

It should also be understood that a time-frequency resource used by the first terminal device to send the indication information indicating that the identifiers conflict may be predefined, preconfigured, or configured.

S320: The first terminal device determines, based on the first indication information, that the first S-SSB is from the second terminal device.

For example, after receiving the S-SSB, the first terminal device obtains the first indication information in the S-SSB, and determines, based on the first indication information, that the S-SSB is from the second terminal device. For example, the first indication information is the first identifier. The first terminal device obtains the first identifier from the S-SSB, and determines, based on the first identifier, that the S-SSB is from the second terminal device.

The first identifier may be determined, for example, randomly determined, by the second terminal device from a plurality of candidate identifiers. For a specific manner of determining the identifier, refer to the description in S310. Details are not described again.

When a plurality of terminal devices send S-SSBs to the first terminal device, the first terminal device may obtain, from the plurality of S-SSBs, a plurality of pieces of indication information indicating the terminal devices, for example, UE IDs. The first terminal device distinguishes between different UEs based on the UE IDs. For a manner of determining an identifier by any one of the plurality of terminal devices, refer to related descriptions in S310. Details are not described herein again.

Optionally, the method may further include the following steps.

S330: The first terminal device measures beams in different directions.

For example, the first terminal device may measure the beams in different directions to obtain RSRPs. It should be understood that the RSRP is merely used as an example of channel quality. For example, it may alternatively be at least one of a received signal strength indication (received signal strength indication, RSSI), reference signal received quality (reference signal received quality, RSRQ), or the like.

S340: The first terminal device sends fourth indication information to the second terminal device. Correspondingly, the second terminal device receives the fourth indication information.

The fourth indication information indicates one beam or a plurality of beams. For example, the beam may be a beam with the highest RSRP. The plurality of beams may be beams with the highest RSRP in parallel, or beams whose RSRPs are greater than a third threshold. The third threshold may be preconfigured, predefined, or configured.

Optionally, the fourth indication information may be an S-SSB index corresponding to the beam or S-SSB indexes corresponding to the plurality of beams.

Optionally, a time-frequency resource used by the first terminal device to send the fourth indication information may be predefined, configured, preconfigured, or indicated by the second terminal device.

For example, as shown in FIG. 6, an S-SSB sending resource and an S-SSB feedback resource (namely, the time-frequency resource of the fourth indication information) are predefined, and S-SSBs in different directions correspond to different feedback resources.

Optionally, the method may further include the following step.

S350: The second terminal device determines whether to send the first sidelink synchronization signal block S-SSB.

In a possible manner, if the first S-SSB is used for beam management/beam matching, the second terminal device determines to send the first S-SSB.

In another possible manner, if the second terminal device is in coverage of a cell, *networkControlledSyncTx* is not configured, an RSRP measurement result of a reference cell is greater than a threshold *syncTxThreshIC,* and the S-SSB is used for beam management/beam matching, the second terminal device determines to send the S-SSB. If the second terminal device is out of coverage of a cell and is not directly synchronized to a GNSS, the second terminal device selects a synchronization reference terminal device, and a PSBCH-RSRP measurement result of the selected synchronization reference terminal device is greater than a threshold *syncTxThreshOoC,* the second terminal device determines to send the S-SSB.

It should be understood that S350 may be performed before S310.

In the method, the receive end of the S-SSB can identify different transmit ends. Further, the receive end of the S-SSB can also identify different beam directions, to implement beam management. This can improve communication reliability and communication quality.

It should be understood that the foregoing embodiments are described by using an SL communication system as an example. However, this is not limited. For example, the method in the foregoing embodiments may also be applicable to an SL-U communication system and the like.

Embodiments described in this specification may be independent solutions, or may be combined based on internal logic. All of these solutions fall within the protection scope of this application. It should be understood that the steps in the foregoing embodiments are merely intended to clearly describe the technical solutions of embodiments, and a sequence of performing the steps is not limited.

In the foregoing embodiments provided in this application, the method provided in embodiments of this application is described from a perspective of interaction between devices. To implement functions in the method provided in the foregoing embodiments of this application, the network device or the terminal device may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

Division into modules in embodiments of this application is an example, is merely logical function division, and may be other division during actual implementation. In addition, functional modules in embodiments of this application may be integrated into one processor, or may exist alone physically, or two or more modules may be integrated into one module. The integrated module may be implemented in a form of hardware, or may be implemented in a form of a software functional module.

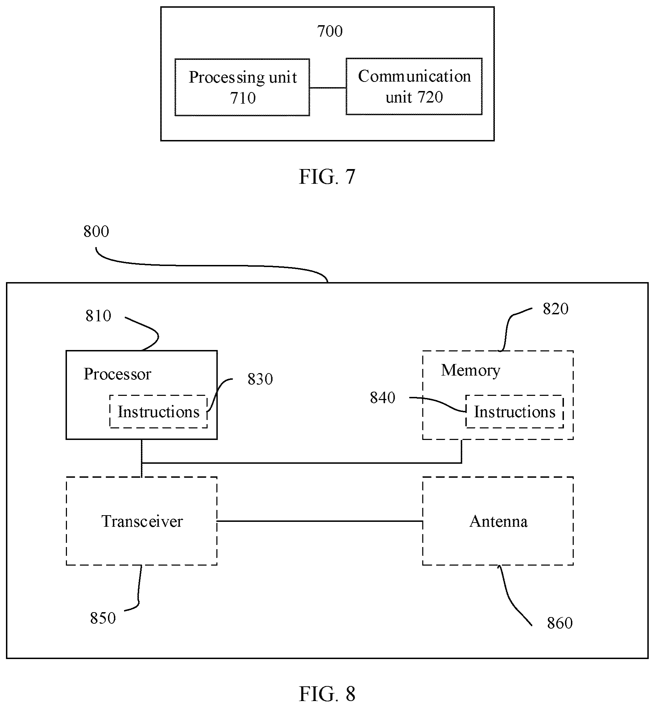

The following describes in detail measurement apparatuses provided in embodiments of this application with reference to FIG. 7 and FIG. 8. It should be understood that descriptions of apparatus embodiments correspond to the descriptions of the method embodiments. Therefore, for content that is not described in detail, refer to the foregoing method embodiments. For brevity, details are not described herein again.

With the same concept as above, as shown in FIG. 7, an embodiment of this application provides a measurement apparatus 700, configured to implement functions of the terminal apparatus in the foregoing method. For example, the apparatus may be a software module or a chip system. In this embodiment of this application, the chip system may include a chip, or may include a chip and another discrete device. The apparatus 700 may include a processing unit 710 and a communication unit 720.

In this embodiment of this application, the communication unit may also be referred to as a transceiver unit, a transceiver module, or the like, and may include a sending unit and/or a receiving unit, respectively configured to perform a sending step and a receiving step of the terminal apparatus in the foregoing method embodiments.

The communication unit may also be referred to as a transceiver, a transceiver machine, a transceiver apparatus, or the like. The processing unit may also be referred to as a processor, a processing board, a processing module, a processing apparatus, or the like. Optionally, a component that is in the communication unit 720 and that is configured to implement a receiving function may be considered as a receiving unit, and a component that is in the communication unit 720 and that is configured to implement a sending function may be considered as a sending unit. That is, the communication unit 720 includes the receiving unit and the sending unit. The communication unit sometimes may also be referred to as a transceiver machine, a transceiver, an interface circuit, or the like. The receiving unit sometimes may also be referred to as a receiver machine, a receiver, a receive circuit, or the like. The sending unit sometimes may also be referred to as a transmitter machine, a transmitter, a transmit circuit, or the like.

When the communication apparatus 700 performs the function of the first terminal device in the procedure shown in any one of FIG. 3 to FIG. 6 in the foregoing embodiments:

The communication unit may be configured to receive a first sidelink synchronization signal block. The first sidelink synchronization signal block includes first indication information. The first indication information indicates a second terminal device.

The processing unit may be configured to determine, based on the first indication information, that the first sidelink synchronization signal block is from the second terminal device, or the like.

The communication unit may be further configured to send third indication information. The third indication information indicates an identifier conflict.

When the communication apparatus 700 performs the function of the second terminal device in the procedure shown in any one of FIG. 3 to FIG. 6 in the foregoing embodiments:

The processing unit may be configured to determine first indication information. The first indication information indicates the second terminal device.

The communication unit may be configured to send a sidelink synchronization signal block. The first sidelink synchronization signal block includes the first indication information.

The communication unit may be further configured to receive third indication information.

The processing unit may be further configured to redetermine a device identifier when identifiers conflict.

The foregoing descriptions are merely an example. The processing unit 710 and the communication unit 720 may further perform other functions. For more detailed descriptions, refer to related descriptions in the method embodiments shown in FIG. 3 to FIG. 6 or another method embodiment. Details are not described herein again.

FIG. 8 shows a communication apparatus 800 according to an embodiment of this application. The apparatus shown in FIG. 8 may be an implementation of a hardware circuit of the apparatus shown in FIG. 7. The communication apparatus is applicable to the flowchart shown above, and performs functions of the first terminal device or the second terminal device in the foregoing method embodiments. For ease of description, FIG. 8 shows only main components of the communication apparatus.

The communication apparatus 800 may be a terminal apparatus, and can implement the functions of the first terminal device or the second terminal device in the method provided in embodiments of this application. Alternatively, the communication apparatus 800 may be an apparatus that can support the first terminal device or the second terminal device in implementing corresponding functions in the method provided in embodiments of this application. The communication apparatus 800 may be a chip system. In this embodiment of this application, the chip system may include a chip, or may include a chip and another discrete device. For a specific function, refer to the descriptions in the foregoing method embodiments.

The communication apparatus 800 includes one or more processors 810, configured to implement or support the communication apparatus 800 in implementing the functions of the first terminal device or the second terminal device in the method provided in embodiments of this application. For details, refer to detailed descriptions in the method example. Details are not described herein again. The processor 810 may also be referred to as a processing unit or a processing module, and may implement a specific control function. The processor 810 may be a general-purpose processor, a dedicated processor, or the like. For example, the processor 810 includes a central processing unit, an application processor, a modem processor, a graphics processor, an image signal processor, a digital signal processor, a video codec processor, a controller, a memory, a neural network processor, and/or the like. The central processing unit may be configured to control the communication apparatus 800, execute a software program, and/or process data. Different processors may be independent components, or may be integrated into one or more processors, for example, integrated into one or more application-specific integrated circuits. It may be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, any regular processor, or the like.

Optionally, the communication apparatus 800 includes one or more memories 820, configured to store instructions 840. The instructions may be run on the processor 810, to enable the communication apparatus 800 to perform the method described in the foregoing method embodiments. The memory 820 is coupled to the processor 810. The coupling in embodiments of this application may be an indirect coupling or a communication connection between apparatuses, units, or modules in an electrical form, a mechanical form, or another form, and is used for information exchange between the apparatuses, the units, or the modules. The processor 810 may cooperate with the memory 820. At least one of the at least one memory may be included in the processor. It should be noted that the memory 820 is not mandatory, and therefore is shown by using dashed lines in FIG. 8.

Optionally, the memory 820 may further store data. The processor and the memory may be separately disposed, or may be integrated together. In this embodiment of this application, the memory 820 may be a non-volatile memory, for example, a hard disk drive (hard disk drive, HDD) or a solid-state drive (solid-state drive, SSD), or may be a volatile memory (volatile memory), for example, a random access memory (random access memory, RAM). Alternatively, the processor in this embodiment of this application may be a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or a storage medium of any other form well known in the art. For example, a storage medium is coupled to a processor, so that the processor can read information from the storage medium and write information into the storage medium. Certainly, the storage medium may alternatively be a component of the processor. The processor and the storage medium may be disposed in an ASIC. In addition, the ASIC may be located in a network device or a terminal device. Certainly, the processor and the storage medium may alternatively exist as discrete components in a network device or a terminal device.

The memory is any other medium that can carry or store expected program code in a form of an instruction or a data structure and that can be accessed by a computer, but is not limited thereto. The memory in embodiments of this application may alternatively be a circuit or any other apparatus that can implement a storage function, and is configured to store program instructions and/or data.

Optionally, the communication apparatus 800 may include instructions 830 (which sometimes may also be referred to as code or a program). The instructions 830 may be run on the processor, to enable the communication apparatus 800 to perform the method described in the foregoing embodiments. The processor 810 may store data.

Optionally, the communication apparatus 800 may further include a transceiver 850 and an antenna 860. The transceiver 850 may be referred to as a transceiver unit, a transceiver module, a transceiver machine, a transceiver circuit, a transceiver, an input/output interface, or the like, and is configured to implement receiving and sending functions of the communication apparatus 800 through the antenna 860.

The processor 810 and the transceiver 850 described in this application may be implemented in an integrated circuit (integrated circuit, IC), an analog IC, a radio frequency integrated circuit (radio frequency identification, RFID), a mixed signal IC, an ASIC, a printed circuit board (printed circuit board, PCB), an electronic device, or the like. The

EP 4 664 784 A1

communication apparatus described in this specification may be implemented by an independent device (for example, an independent integrated circuit or a mobile phone), or may be a part of a large device (for example, a module that may be embedded in another device). For details, refer to the foregoing descriptions about the terminal device and the network device. Details are not described herein again.

Optionally, the communication apparatus 800 may further include one or more of the following components: a wireless communication module, an audio module, an external memory interface, an internal memory, a universal serial bus (universal serial bus, USB) interface, a power management module, an antenna, a speaker, a microphone, an input/output module, a sensor module, a motor, a camera, a display, or the like. It may be understood that in some embodiments, the communication apparatus 800 may include more or fewer components, have some components integrated, or have some components split. The components may be implemented by hardware, software, or a combination of software and hardware.

A person skilled in the art should understand that embodiments of this application may be provided as a method, a system, or a computer program product. Therefore, this application may use a form of hardware-only embodiments, software-only embodiments, or embodiments with a combination of software and hardware. In addition, this application may use a form of a computer program product that is implemented on one or more computer-usable storage media (including but not limited to a magnetic disk memory, an optical memory, and the like) that include computer-usable program code.

This application is described with reference to the flowchart and/or the block diagrams of the method, the device (system), and the computer program product according to this application. It should be understood that computer program instructions may be used to implement each process and/or each block in the flowchart and/or the block diagrams and a combination of a process and/or a block in the flowchart and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowchart and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowchart and/or in one or more blocks in the block diagrams.

It is clear that a person skilled in the art can make various modifications and variations to this application without departing from the scope of this application. This application is intended to cover these modifications and variations of this application provided that they fall within the scope defined by the claims of this application and their equivalent technologies.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication method, comprising:

   receiving, by a first terminal device, a first sidelink synchronization signal block, wherein the first sidelink synchronization signal block comprises first indication information, and the first indication information indicates a second terminal device; and
   determining, by the first terminal device based on the first indication information, that the first sidelink synchronization signal block is from the second terminal device.

2. The method according to claim 1, wherein the first sidelink synchronization signal block belongs to N sidelink synchronization signal blocks, the N sidelink synchronization signal blocks comprise N pieces of first indication information, the first indication information belongs to the N pieces of first indication information, the N pieces of first indication information indicate N terminal devices corresponding to the N sidelink synchronization signal blocks, and the method further comprises:
   receiving, by the first terminal device, the N sidelink synchronization signal blocks.

3. The method according to claim 1 or 2, wherein the first sidelink synchronization signal block comprises second indication information, and the second indication information indicates a direction of the first sidelink synchronization

33

signal block.

4. The method according to claim 3, wherein the first sidelink synchronization signal block belongs to M sidelink synchronization signal blocks, the M sidelink synchronization signal blocks further comprise M pieces of second indication information, the second indication information belongs to the M pieces of second indication information, and the M pieces of second indication information indicate directions of the M sidelink synchronization signal blocks.

5. The method according to claim 3 or 4, wherein the second indication information is a sidelink synchronization signal block index, and the sidelink synchronization signal block index is carried in a physical sidelink broadcast channel demodulation reference signal PSBCH DMRS.

6. The method according to any one of claims 1 to 5, wherein the first indication information is carried in a sidelink primary synchronization signal S-PSS and a sidelink secondary synchronization signal S-SSS.

7. The method according to claim 1 or 2, wherein the first indication information is carried in an S-PSS, an S-SSS, and a PSBCH DMRS.

8. The method according to any one of claims 1 to 7, wherein the first indication information is a first identifier, the first identifier indicates the second terminal device, the first identifier is determined from at least one candidate identifier, any candidate identifier in the at least one candidate identifier is a part of a sidelink synchronization signal identifier SL-SSID, and the SL-SSID is carried in the sidelink synchronization signal block.

9. The method according to claim 8, wherein the SL-SSID is indicated through Y bits, the at least one candidate identifier is indicated through X bits in the Y bits, X is less than Y, and a value range of the at least one candidate identifier is {0, 1, ..., 167}.

10. The method according to claim 8 or 9, wherein the SL-SSID satisfies the following relations:

$$N_{ID}^{SL} = N_{ID,1}^{SL} + 336 N_{ID,2}^{SL}$$

$$N_{ID,1}^{SL} = N_{ID,11}^{SL} + 168 N_{ID,12}^{SL}$$

wherein $N_{ID}^{SL}$ is an index value set of the SL-SSID, $N_{ID,1}^{SL}$ is an index value set of the S-SSS, $N_{ID,1}^{SL} \in \{0, 1, \dots, 335\}$, $N_{ID,2}^{SL}$ is an index value set of the S-PSS, $N_{ID,2}^{SL} \in \{0, 1, 2\}$, $N_{ID,11}^{SL}$ is a candidate identifier, $N_{ID,12}^{SL} \in \{0, 1\}$, and $N_{ID,11}^{SL} \in \{0, 1, \dots, 167\}$.

11. The method according to any one of claims 8 to 10, wherein the first terminal device corresponds to a second identifier, the first terminal device determines a third identifier when the first identifier is the same as the second identifier, the third identifier is different from the first identifier, the third identifier belongs to the at least one candidate identifier, and the third identifier indicates the first terminal device.

12. The method according to any one of claims 8 to 11, wherein the method further comprises:
sending, by the first terminal device, third indication information when determining that a preset condition is satisfied, wherein the third indication information indicates an identifier conflict, and the preset condition is at least one of the following:

a quantity of sidelink synchronization signal blocks that comprise a same identifier and whose reference signal received powers RSRPs are greater than a first threshold is greater than a second threshold;
a proportion of the quantity of sidelink synchronization signal blocks that comprise the same identifier and whose RSRPs are greater than the first threshold in a quantity of sidelink synchronization signal blocks received by the first terminal device is greater than a third threshold;
the first terminal device receives, on different beam resources, sidelink synchronization signal blocks that comprise a same identifier and a same sidelink synchronization signal block index; or
the first terminal device receives, on a same beam resource, sidelink synchronization signal blocks that comprise a same identifier and different sidelink synchronization signal block indexes.

13. A communication method, comprising:

determining, by a second terminal device, first indication information, wherein the first indication information indicates the second terminal device; and
sending, by the second terminal device, a first sidelink synchronization signal block to a first terminal device, wherein the first sidelink synchronization signal block comprises the first indication information.

14. The method according to claim 13, wherein the first sidelink synchronization signal block belongs to N sidelink synchronization signal blocks, the N sidelink synchronization signal blocks comprise N pieces of first indication information, the first indication information belongs to the N pieces of first indication information, and the N pieces of first indication information indicate N terminal devices corresponding to the N sidelink synchronization signal blocks.

15. The method according to claim 13 or 14, wherein the first sidelink synchronization signal block comprises second indication information, and the second indication information indicates a direction of the first sidelink synchronization signal block.

16. The method according to claim 15, wherein the first sidelink synchronization signal block belongs to M sidelink synchronization signal blocks, the M sidelink synchronization signal blocks further comprise M pieces of second indication information, the second indication information belongs to the M pieces of second indication information, and the M pieces of second indication information indicate directions of the M sidelink synchronization signal blocks.

17. The method according to claim 15 or 16, wherein the second indication information is a sidelink synchronization signal block index, and the sidelink synchronization signal block index is carried in a physical sidelink broadcast channel demodulation reference signal PSBCH DMRS.

18. The method according to any one of claims 13 to 17, wherein the first indication information is carried in a sidelink primary synchronization signal S-PSS and a sidelink secondary synchronization signal S-SSS.

19. The method according to claim 13 or 14, wherein the first indication information is carried in an S-PSS, an S-SSS, and a PSBCH DMRS.

20. The method according to any one of claims 13 to 19, wherein the first indication information is a first identifier, the first identifier indicates the second terminal device, and the method further comprises:
determining, by the second terminal device, the first identifier from at least one candidate identifier, wherein any candidate identifier in the at least one candidate identifier is a part of a sidelink synchronization signal identifier SL-SSID, and the SL-SSID is carried in the sidelink synchronization signal block.

21. The method according to claim 20, wherein the SL-SSIDs are indicated through Y bits, the at least one candidate identifier is indicated through X bits in the Y bits, X is less than Y, and a value range of the at least one candidate identifier is {0, 1, ..., 167}.

22. The method according to claim 20 or 21, wherein the SL-SSID satisfies the following relations:

$$N_{ID}^{SL} = N_{ID,1}^{SL} + 336 N_{ID,2}^{SL}$$

$$N_{ID,1}^{SL} = N_{ID,11}^{SL} + 168 N_{ID,12}^{SL}$$

wherein $N_{ID}^{SL}$ is an index value set of the SL-SSID, $N_{ID,1}^{SL}$ is an index value set of the S-SSS, $N_{ID,1}^{SL} \in \{0, 1, \ldots, 335\}$, $N_{ID,2}^{SL}$ is an index value set of the S-PSS, $N_{ID,2}^{SL} \in \{0, 1, 2\}$, $N_{ID,11}^{SL}$ is a candidate identifier, $N_{ID,12}^{SL} \in \{0, 1\}$, and $N_{ID,11}^{SL} \in \{0, 1, \ldots, 167\}$.

23. The method according to any one of claims 20 to 22, wherein the method further comprises:

receiving, by the second terminal apparatus, third indication information, wherein the third indication information indicates that the first identifier conflicts with a second identifier, and the second identifier is an identifier of the first terminal apparatus; and

determining, by the second terminal apparatus, a fourth identifier, wherein the fourth identifier is different from the first identifier, and the fourth identifier belongs to the at least one candidate identifier.

24. A communication apparatus, comprising a transceiver module and a processing module, wherein the transceiver module is configured to receive a first sidelink synchronization signal block, the first sidelink synchronization signal block comprises first indication information, and the first indication information indicates a second terminal device; and the processing module is configured to determine, based on the first indication information, that the first sidelink synchronization signal block is from the second terminal device.

25. The apparatus according to claim 24, wherein the first sidelink synchronization signal block belongs to N sidelink synchronization signal blocks, the N sidelink synchronization signal blocks comprise N pieces of first indication information, the first indication information belongs to the N pieces of first indication information, the N pieces of first indication information indicate N terminal devices corresponding to the N sidelink synchronization signal blocks, and the transceiver module is further configured to receive the N sidelink synchronization signal blocks.

26. The apparatus according to claim 24 or 25, wherein the first sidelink synchronization signal block comprises second indication information, and the second indication information indicates a direction of the first sidelink synchronization signal block.

27. The apparatus according to claim 26, wherein the first sidelink synchronization signal block belongs to M sidelink synchronization signal blocks, the M sidelink synchronization signal blocks further comprise M pieces of second indication information, the second indication information belongs to the M pieces of second indication information, and the M pieces of second indication information indicate directions of the M sidelink synchronization signal blocks.

28. The apparatus according to claim 26 or 27, wherein the second indication information is a sidelink synchronization signal block index, and the sidelink synchronization signal block index is carried in a physical sidelink broadcast channel demodulation reference signal PSBCH DMRS.

29. The apparatus according to any one of claims 24 to 28, wherein the first indication information is carried in a sidelink primary synchronization signal S-PSS and a sidelink secondary synchronization signal S-SSS.

30. The apparatus according to claim 24 or 25, wherein the first indication information is carried in an S-PSS, an S-SSS, and a PSBCH DMRS.

31. The apparatus according to any one of claims 24 to 30, wherein the first indication information is a first identifier, the first identifier indicates the second terminal device, the first identifier is determined from at least one candidate identifier, any candidate identifier in the at least one candidate identifier is a part of a sidelink synchronization signal identifier SL-SSID, and the SL-SSID is carried in the sidelink synchronization signal block.

32. The apparatus according to claim 31, wherein the SL-SSID is indicated through Y bits, the at least one candidate identifier is indicated through X bits in the Y bits, X is less than Y, and a value range of the at least one candidate identifier is {0, 1, ..., 167}.

33. The apparatus according to claim 31 or 32, wherein the SL-SSID satisfies the following relations:

$$N_{ID}^{SL} = N_{ID,1}^{SL} + 336N_{ID,2}^{SL}$$

$$N_{ID,1}^{SL} = N_{ID,11}^{SL} + 168N_{ID,12}^{SL}$$

wherein $N_{ID}^{SL}$ is an index value set of the SL-SSID, $N_{ID,1}^{SL}$ is an index value set of the S-SSS, $N_{ID,1}^{SL} \in \{0, 1, \ldots, 335\}$, $N_{ID,2}^{SL}$ is an index value set of the S-PSS, $N_{ID,2}^{SL} \in \{0, 1, 2\}$, $N_{ID,11}^{SL}$ is a candidate identifier, $N_{ID,12}^{SL} \in \{0, 1\}$, and $N_{ID,11}^{SL} \in \{0, 1, \ldots, 167\}$.

34. The apparatus according to any one of claims 31 to 33, wherein a first terminal device corresponds to a second identifier, the first terminal device determines a third identifier when the first identifier is the same as the second identifier, the third identifier is different from the first identifier, the third identifier belongs to the at least one candidate identifier, and the third identifier indicates the first terminal device.

35. The apparatus according to any one of claims 31 to 34, wherein
the processing module is further configured to determine that a preset condition is satisfied, and the transceiver module is configured to send third indication information, wherein the third indication information indicates an identifier conflict, and the preset condition is at least one of the following:

a quantity of sidelink synchronization signal blocks that comprise a same identifier and whose RSRPs are greater than a first threshold is greater than a second threshold;
a proportion of the quantity of sidelink synchronization signal blocks that comprise the same identifier and whose RSRPs are greater than the first threshold in a quantity of sidelink synchronization signal blocks received by the first terminal device is greater than a third threshold;
the first terminal device receives, on different beam resources, sidelink synchronization signal blocks that comprise a same identifier and a same sidelink synchronization signal block index; or
the first terminal device receives, on a same beam resource, sidelink synchronization signal blocks that comprise a same identifier and different sidelink synchronization signal block indexes.

36. A communication apparatus, comprising a transceiver module and a processing module, wherein the processing module is configured to determine first indication information, and the first indication information indicates the second terminal device; and the transceiver module is configured to send a first sidelink synchronization signal block to a first terminal device, and the first sidelink synchronization signal block comprises the first indication information.

37. The apparatus according to claim 36, wherein the first sidelink synchronization signal block belongs to N sidelink synchronization signal blocks, the N sidelink synchronization signal blocks comprise N pieces of first indication information, the first indication information belongs to the N pieces of first indication information, and the N pieces of first indication information indicate N terminal devices corresponding to the N sidelink synchronization signal blocks.

38. The apparatus according to claim 36 or 37, wherein the first sidelink synchronization signal block comprises second indication information, and the second indication information indicates a direction of the first sidelink synchronization signal block.

39. The apparatus according to claim 38, wherein the first sidelink synchronization signal block belongs to M sidelink synchronization signal blocks, the M sidelink synchronization signal blocks further comprise M pieces of second indication information, the second indication information belongs to the M pieces of second indication information, and the M pieces of second indication information indicate directions of the M sidelink synchronization signal blocks.

40. The apparatus according to claim 38 or 39, wherein the second indication information is a sidelink synchronization signal block index, and the sidelink synchronization signal block index is carried in a PSBCH DMRS.

41. The apparatus according to any one of claims 36 to 40, wherein the first indication information is carried in a sidelink primary synchronization signal S-PSS and a sidelink secondary synchronization signal S-SSS.

42. The apparatus according to claim 36 or 37, wherein the first indication information is carried in an S-PSS, an S-SSS, and a PSBCH DMRS.

43. The apparatus according to any one of claims 36 to 42, wherein the first indication information is a first identifier, the first identifier indicates the second terminal device, the processing module is further configured to determine the first identifier from at least one candidate identifier, any candidate identifier in the at least one candidate identifier is a part of a sidelink synchronization signal identifier SL-SSID, and the SL-SSID is carried in the sidelink synchronization signal block.

44. The apparatus according to claim 43, wherein the SL-SSID is indicated through Y bits, the at least one candidate identifier is indicated through X bits in the Y bits, X is less than Y, and a value range of the at least one candidate identifier is {0, 1, ..., 167}.

**45.** The apparatus according to claim 43 or 44, wherein the SL-SSID satisfies the following relations:

$$N_{ID}^{SL} = N_{ID,1}^{SL} + 336 N_{ID,2}^{SL}$$

$$N_{ID,1}^{SL} = N_{ID,11}^{SL} + 168 N_{ID,12}^{SL}$$

wherein $N_{ID}^{SL}$ is an index value set of the SL-SSID, $N_{ID,1}^{SL}$ is an index value set of the S-SSS, $N_{ID,1}^{SL} \in \{0, 1, \dots, 335\}$, $N_{ID,2}^{SL}$ is an index value set of the S-PSS, $N_{ID,2}^{SL} \in \{0, 1, 2\}$, $N_{ID,11}^{SL}$ is a candidate identifier, $N_{ID,12}^{SL} \in \{0, 1\}$, and $N_{ID,11}^{SL} \in \{0, 1, \dots, 167\}$.

**46.** The apparatus according to any one of claims 43 to 45, wherein the transceiver module is further configured to receive third indication information, the third indication information indicates that the first identifier conflicts with a second identifier, and the second identifier is an identifier of the first terminal apparatus; and the processing module is further configured to determine a fourth identifier, the fourth identifier is different from the first identifier, and the fourth identifier belongs to the at least one candidate identifier.

**47.** A communication system, comprising the communication apparatus according to any one of claims 24 to 46.

**48.** A communication apparatus, comprising:
a processor, configured to execute computer instructions stored in a memory, to enable the apparatus to perform the method according to any one of claims 1 to 23.

**49.** The apparatus according to claim 48, wherein the apparatus further comprises the memory.

**50.** The apparatus according to claim 48 or 49, wherein the apparatus further comprises a communication interface, and the communication interface is coupled to the processor; and
the communication interface is configured to input and/or output information.

**51.** The apparatus according to any one of claims 48 to 50, wherein the apparatus is a chip.

FIG. 1

EP 4 664 784 A1

| PSBCH | S-PSS | S-PSS | S-SSS | S-SSS | PSBCH | PSBCH | PSBCH | PSBCH | PSBCH | PSBCH | GAP |
|-------|-------|-------|-------|-------|-------|-------|-------|-------|-------|-------|-----|

FIG. 2

```
┌──────────────┐                              ┌──────────────┐
│ First terminal│                              │Second terminal│
│    device     │                              │    device     │
└──────┬───────┘                              └──────┬───────┘
       │                       ┌ ─ ─ ─ ─ ─ ─ ─ ─ ─ ─ ┼ ─ ─ ─ ─ ─ ─ ─ ┐
       │                       │ S350: Determine whether to send a   │
       │                       │ first S-SSB                          │
       │                       └ ─ ─ ─ ─ ─ ─ ─ ─ ─ ─ ┬ ─ ─ ─ ─ ─ ─ ─ ┘
       │        S310: First S-SSB               │
       │◄──────────────────────────────────────┤
       │                                        │
┌──────┴────────────────────────┐              │
│ S320: Determine, based on first│              │
│ indication information, that the│             │
│ first S-SSB is from the second │              │
│ terminal device                │              │
└──────┬────────────────────────┘              │
┌ ─ ─ ─┴ ─ ─ ─ ─ ─ ─ ─ ─ ─ ─ ─ ┐              │
│ S330: Measure beams in different│             │
│ directions                      │             │
└ ─ ─ ─┬ ─ ─ ─ ─ ─ ─ ─ ─ ─ ─ ─ ┘              │
       │   S340: Fourth indication information   │
       ├ ─ ─ ─ ─ ─ ─ ─ ─ ─ ─ ─ ─ ─ ─ ─ ─ ─ ─ ─►│
       │                                        │
```

FIG. 3

FIG. 4

FIG. 5

FIG. 6

700

Processing unit 710 — Communication unit 720

FIG. 7

800

810

Processor

830

Instructions

820

Memory

840

Instructions

Transceiver

Antenna

850

860

FIG. 8

## INTERNATIONAL SEARCH REPORT

| International application No. |
| --- |
| **PCT/CN2024/074413** |

### A. CLASSIFICATION OF SUBJECT MATTER

H04B7/06(2006.01)i

According to International Patent Classification (IPC) or to both national classification and IPC

### B. FIELDS SEARCHED

Minimum documentation searched (classification system followed by classification symbols)

H04B7/-; H04W56/-; H04W48/-

Documentation searched other than minimum documentation to the extent that such documents are included in the fields searched

Electronic data base consulted during the international search (name of data base and, where practicable, search terms used)

CNABS, CNTXT, ENTXTC, 知网, CNKI, 万方, WANFANG, VEN, ENTXT, 3GPP: 同步信号块, 主同步信号块, 辅同步信号块, 侧行, 侧链路, 辅链路, 副链路, 设备, UE, 终端, 标识, 标志, ID, S-SSB, S-SSS, S-PSS, sidelink, identify, SL-SSID, SSID-SL, SL SSID, SLSS ID, S-SSID, SLSSID, user, equipment, SL, D2D, V2X, V2V, V2I, V2N, V2P

### C. DOCUMENTS CONSIDERED TO BE RELEVANT

| Category* | Citation of document, with indication, where appropriate, of the relevant passages | Relevant to claim No. |
| --- | --- | --- |
| X | US 2021321343 A1 (QUALCOMM INC.) 14 October 2021 (2021-10-14) description, paragraphs 41-158 | 1-7, 13-19, 24-30, 36-42, 47-51 |
| X | US 2021168574 A1 (CONVIDA WIRELESS L.L.C.) 03 June 2021 (2021-06-03) description, paragraphs 67-334 | 1-2, 6-7, 13-14, 18-19, 24-25, 28-29, 36-37, 41-42, 47-51 |
| A | CN 112689324 A (DATANG MOBILE COMMUNICATIONS EQUIPMENT CO., LTD.) 20 April 2021 (2021-04-20) entire document | 1-51 |
| A | CN 115152282 A (NOKIA TECHNOLOGIES OY) 04 October 2022 (2022-10-04) entire document | 1-51 |
| A | CN 114342484 A (GUANGDONG OPPO MOBILE COMMUNICATIONS CO., LTD.) 12 April 2022 (2022-04-12) entire document | 1-51 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **19 March 2024** | **25 March 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/074413** |

| C. | DOCUMENTS CONSIDERED TO BE RELEVANT | |
| --- | --- | --- |
| Category* | Citation of document, with indication, where appropriate, of the relevant passages | Relevant to claim No. |
| A | US 2022417872 A1 (LG ELECTRONICS INC.) 29 December 2022 (2022-12-29)<br>entire document | 1-51 |

Form PCT/ISA/210 (second sheet) (July 2022)

**INTERNATIONAL SEARCH REPORT**
Information on patent family members

| International application No. |
| --- |
| **PCT/CN2024/074413** |

| Patent document cited in search report | | | Publication date (day/month/year) | Patent family member(s) | | | Publication date (day/month/year) |
| --- | --- | --- | --- | --- | --- | --- | --- |
| US | 2021321343 | A1 | 14 October 2021 | EP | 4133810 | A1 | 15 February 2023 |
| | | | | WO | 2021206885 | A1 | 14 October 2021 |
| | | | | US | 11665655 | B2 | 30 May 2023 |
| | | | | IN | 202247045459 | A | 16 September 2022 |
| | | | | CN | 115398994 | A | 25 November 2022 |
| US | 2021168574 | A1 | 03 June 2021 | WO | 2020033086 | A1 | 13 February 2020 |
| | | | | JP | 2021533683 | A | 02 December 2021 |
| | | | | JP | 7383008 | B2 | 17 November 2023 |
| | | | | EP | 3818655 | A1 | 12 May 2021 |
| | | | | KR | 20210042940 | A | 20 April 2021 |
| | | | | IN | 202117007803 | A | 03 June 2021 |
| | | | | CN | 112567673 | A | 03 June 2021 |
| CN | 112689324 | A | 20 April 2021 | CN | 112689324 | B | 28 June 2022 |
| CN | 115152282 | A | 04 October 2022 | WO | 2021162709 | A1 | 19 August 2021 |
| | | | | IN | 202247051527 | A | 16 September 2022 |
| | | | | EP | 4104546 | A1 | 21 December 2022 |
| | | | | US | 2023124916 | A1 | 20 April 2023 |
| CN | 114342484 | A | 12 April 2022 | WO | 2021087822 | A1 | 14 May 2021 |
| | | | | WO | 2021088112 | A1 | 14 May 2021 |
| US | 2022417872 | A1 | 29 December 2022 | WO | 2021080372 | A1 | 29 April 2021 |
| | | | | KR | 20220066955 | A | 24 May 2022 |
| | | | | KR | 102529773 | B1 | 09 May 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310162616

- CN 202310384302